(19) **Europäisches Patentamt**

**European Patent Office**

**Office européen des brevets**

(11) **EP 1 387 567 A2**

(12) **EUROPEAN PATENT APPLICATION**

(43) Date of publication:
**04.02.2004 Bulletin 2004/06**

(51) Int Cl.⁷: **H04N 1/32**

(21) Application number: **03016606.0**

(22) Date of filing: **29.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.08.2002 JP 2002225625**

(71) Applicant: **Ricoh Company Ltd.**
**Tokyo 143-8555 (JP)**

(72) Inventor: **Namizuka, Yoshiyuki**
**Tokyo 143-8555 (JP)**

(74) Representative: **Schwabe - Sandmair - Marx**
**Stuntzstrasse 16**
**81677 München (DE)**

(54) **Image forming apparatus, control method, system, and recording medium**

(57)    An image forming apparatus includes an image reading device that reads an image of an original document and an image forming device that forms an image on a sheet in accordance with image data read by the image reading device. An operation unit-connecting device (30) is provided so as to detachably connect an operation unit (21). The operation unit accepts inputting of operational instructions operating the image forming apparatus. A process controller (11) is provided so as to control the image forming apparatus to operate. An expansion unit-connecting device (50, 35) is also provided so as to connect an additionally attachable expansion unit (60). The expansion unit includes an expanded operation control device (61) that allocates the image reading device or image forming device to a job. The process controller controls the operation unit to operate and receives control command from the expansion control device to perform image formation.

FIG. 1

EP 1 387 567 A2

**Description**

BACKGROUND OF THE INVENTION

Field of the invention:

The present invention relates to an apparatus, system, method, and computer readable recording medium for forming an image using an image-reading device that reads an image of an original document and an image-forming device that forms an image on a sheet in accordance with image data read by the image-reading device.

In particular, the present invention relates to an apparatus, system, method, and computer readable recording medium capable of adding various functions to the image forming apparatus.

Discussion of the Background:

Recently, a digital multi-functional printer (MFP) enters into a market while including various functions of a facsimile, a printer, a scanner, and so on beside a copier as an image forming apparatus that includes an image reading device reading an image of an original document and an image forming device forming an image on a sheet in accordance with image data read by the image reading device.

A typical MFP has been known that various control units, such as a facsimile control unit, a printer control unit, a scanner control unit, etc., formed from hard ware such as ASIC are added to a copier section that includes an image reading unit, an image processing unit, an image writing unit, a memory control section, and a memory unit or the like, via a mother board. In such an MFP, operations of the facsimile, printer, and scanner or the like are realized by partially using the function of a copier section.

However, such expansion function use control units are required to independently perform a process in each of units unless the process can utilize the function of the copier section as it is. As a result, since a memory or the like is necessarily included per a unit, capacity of a memory, cost, and size increase as a problem. An MFP disclosed in Japanese Patent Application Laid Open Number 2000-316063 has resolved such a problem such that a system controller supervises an image reading device, an image forming device, and an image memory or the like in block as resources, and controls each of functions of a copier, facsimile, printer, and a scanner or the like in order to share these resources.

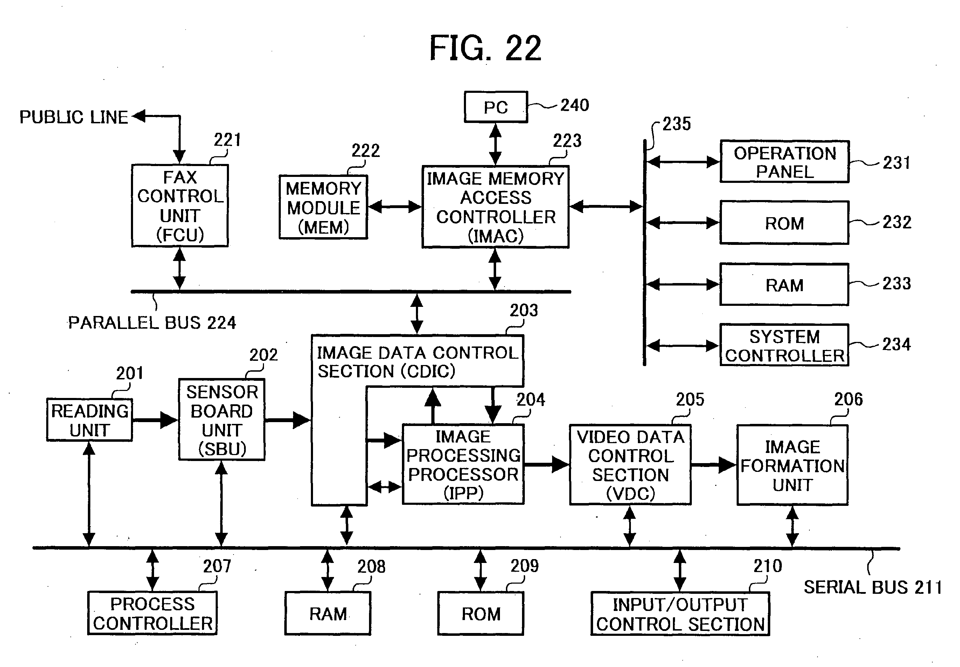

As shown in Fig. 22, such a conventional MFP includes a reading unit 201, a sensor board unit (SBU) 202, an image data control section (CDIC) 203, an image processing processor (IPP) 204, a video data control section (VDC) 205, an image formation unit 206, a process controller 207, a RAM 208, a ROM 209, and an input/output control section 210 in an engine side unit 201. These units other than the IPP 204 are connected to each other via a serial bus 211.

Under control of the process controller 207, these units realize a copying operation by reading an image of an original document and forming an image on a sheet in accordance with image data read therefrom.

A system controller 234 generally controls the MFP. The process controller 207 drives respective units of the engine side in accordance with instructions given by the system controller 234. The system controller 234 is connected to a local serial bus 235 together with an operation panel 231, a ROM 232, and a RAM 233, and is enabled to communicate prescribed data with a plurality of units connected to a parallel bus 224 via an image memory access controller (IMAC) 223. The system controller 234 transmits prescribed command to the process controller 207 via the CDIC 203.

A personal computer (PC) 240 is connected to the IMAC 223 via a local area network (LAN). Thus, the MPF can function as a printer forming an image in accordance with data received from the PC 240. A facsimile control unit (FCC) 221 is also connected to the parallel bus 224. By converting a signal with an FCU 221, the MFP can function as a facsimile forming an image in accordance with image data received from a public line and reading and transmitting image data to the public line. Thus, the MFP includes three functions as the copier, printer, and facsimile.

The system controller 234 controls the operation panel 231 to operate. The system controller 234 also allocates right of using resources such as the reading unit 201, image forming unit 206, parallel bus 224, etc., to respective jobs of functions in accordance with a request from either the PC 240 or facsimile control unit 221 so that a prescribed operation is executed by them. A memory module 222 that temporary stores image data is a type of a resource, and can be shared by the respective functions. When a plurality of jobs is simultaneously designated to execute, the system controller 234 appropriately allocates the resources so as to arbitrate these jobs.

Further, the system controller 234 and process controller 207 mutually communicate with each other via the local serial bus 235, IMAC 223, parallel bus 224, CDIC 203, and serial bus 211. The process controller 207 controls image data transfer and operations of respective sections of the engine side in accordance with allocation of the resources by the system controller 234. Thus, according to such an MFP, the resources are appropriately allocated so as to efficiently operate and thereby the entire MFP can be optimally controlled. Further, since many resources including the above-mentioned memory, inherently needed in the respective functions, are shared, cost and size of an MFP or copier can be suppressed.

However, even when a user only needs one function, for example, a copying function, in order to accept addition of the other functions in future, a control device (i.e., a system controller 234) to supervise each of the units in block as resources and jobs executed by the units is necessitated beside a control device (i.e., a process controller 207) that directly controls each of image reading and forming devices to operate and read and write data from and to an image memory.

As a result, when viewed from a point of supplying a fundamental function, since a number of required parts more increases than that required in a conventional apparatus not designed to expand functions, cost and consumption of power increase as a problem.

SUMMARY

Accordingly, an object of the present invention is to address and resolve the above-noted and other problems and provide a new image forming apparatus. The above and other objects are achieved according to the present invention by providing a novel image forming apparatus including an image reading device that reads an image of an original document and an image forming device that forms an image on a sheet in accordance with image data read by the image reading device. An operation unit connecting device detachably connects an operation unit that accepts inputting of operational instructions operating the image forming apparatus. A process controller is provided so as to control the image forming apparatus to operate. An expansion unit-connecting device is also provided so as to additionally connect an expansion unit. The expansion unit includes an expanded operation control device (i.e., a system controller) included in the expansion unit and allocates the image reading device or image forming device to a job. The process controller controls the operation unit to operate and receives control command from the expansion control device so as to perform image formation.

The features disclosed in connection with the following preferred embodiments can be combined to accomplish further embodiments providing further improvements.

In another embodiment, a memory is provided so as to store at least two control programs controlling the image forming apparatus. An extension unit-detecting device is provided so as to detect presence of connection of the extension unit. A control program-selecting device is also provided so as to select applicable control program to be executed by the process controller in accordance with the detection result of the extension unit-detecting device.

In yet another embodiment, an extension unit detecting device is provided so as to detect presence of connection of the extension unit. A power saving mode setting device is also provided so as set a power saving mode to the image forming apparatus. The power saving mode-setting device determines sections of the image forming apparatus to operate under the power saving mode in accordance with the detection result of the extension unit-detecting device.

In yet another embodiment, the extension unit-detecting device detects presence of connection of the expansion unit by determining if any one of units is connected to the expansion unit-connecting device.

In yet another embodiment, the extension unit-detecting device detects the presence of the connection of the extension unit by determining that the extension unit is connected when the operation unit is not connected to the operation unit-connecting device, and that the extension unit is not connected when the operation unit is connected to the operation unit-connecting device.

In yet another embodiment, the extension unit-connecting device includes a data-transferring device that communicates image data and control command with the expansion unit. A bus-selecting device is provided so as to select a data transfer destination in accordance with a type of the data received by the data-transferring device.

In yet another embodiment, the image reading device includes a contact image sensor. A color identification data-adding device is also provided so as to add color identification data to image data read by the contact image sensor, wherein the color identification data indicates a location and color component.

In yet another embodiment, a read image data processing device is provided so as to apply image processing to image data read by the image reading device. A write image data processing device is also provided so as to convert the image data into a signal driving the image forming apparatus. The write image data processing device applies image processing necessitated along with the converting process to the signal. A supervising device is provided so as to supervise data input and output to and from the process controller. The extension unit-connecting device includes a bus that communicates data and a bus interface connected to the bus. At least the read image processing device, the write image processing device, the supervising device, the bus interface, and the bus-selecting device are integrated on the same chip.

BRIEF DESCRIPTION OF DRAWINGS:

A more complete appreciation of the present invention and many of the attendant advantages thereof will be readily obtained as the same becomes better understood by reference to the following detailed description when considered in connection with the accompanying drawings, wherein:

Fig. 1 is a block chart illustrating a copier of one example of an image forming apparatus according to the present invention;
Fig. 2 is a block chart more specifically illustrating a video control section illustrated in Fig. 1;
Fig. 3 is a chart illustrating data streaming when the copier illustrated in Figs. 1 and 2 independently operates;

Fig. 4 is a block chart illustrating an MFP as one example of an image forming system according to the present invention;

Fig. 5 is a block chart more specifically illustrating an image memory access controller illustrated in Fig. 4;

Fig. 6 is a chart illustrating data streaming when the MFP illustrated in Figs. 4 and 5 operates;

Fig. 7 is a chart illustrating a relation between the copier illustrated in Figs. 1 and 2 and the MFP illustrated in Figs. 4 and 5;

Fig. 8 is a chart also illustrating a relation between a copier and an MFP;

Fig. 9 is a chart also illustrating a relation between a copier and an MFP;

Fig. 10 is a flowchart illustrating a process of selecting control program to be executed by a process controller;

Fig. 11 is a chart illustrating portions to be operated in a power saving mode when the copier of Figs. 1 and 2 independently operates;

Fig. 12 is a chart illustrating portions to be operated in a power saving mode when the MFP of Figs. 4 and 5 operates;

Fig. 13 is a flowchart illustrating a power supply control process to be executed by a process controller when the image forming apparatus moves to a power saving mode;

Fig. 14 is a chart illustrating data streaming when the MFP illustrated in Figs. 4 and 5 operates under modified control;

Fig. 15 is a flowchart illustrating a process of placing control of an operation unit under the other controller in the modified example;

Fig. 16 is a chart illustrating a signal used in a line extraction process of the copier illustrated in Figs. 1 and 2;

Fig. 17 is a chart more specifically illustrating a line extraction processing circuit illustrated in Fig. 16;

Fig. 18 is a flowchart illustrating a process performed in a sub scan extraction circuit illustrated in Fig. 17;

Fig. 19 is a chart illustrating a signal used in a line sequential identification process illustrated in Figs. 1 and 2;

Fig. 20 is a chart illustrating an rgb-sel signal illustrated in Fig. 19;

Fig. 21 is a chart illustrating a relation between the rgb-sel signal and the other signal; and

Fig. 22 is a block chart illustrating a conventional MFP.

## PREFERRED EMBODIMENT OF THE PRESENT INVENTION

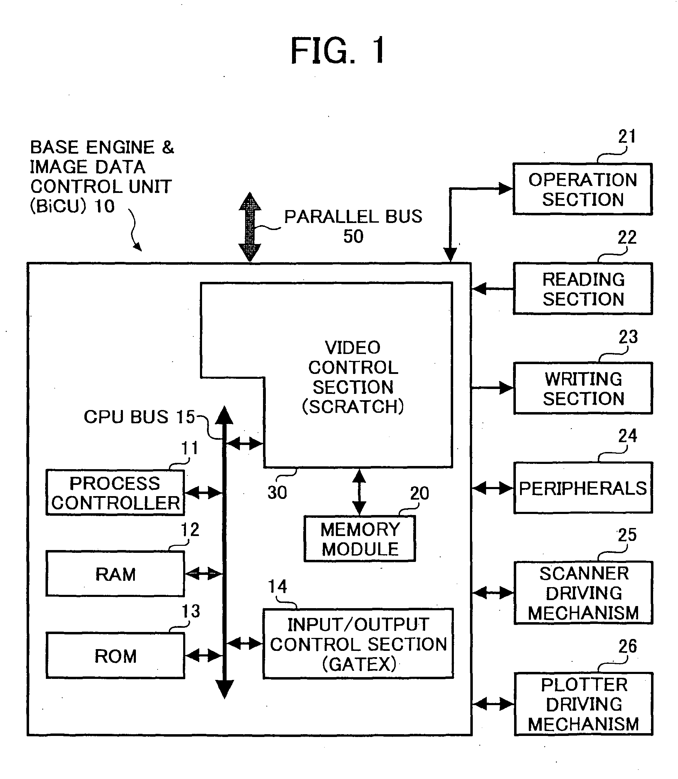

Referring now to the drawings, wherein like reference numerals and marks designate identical or corresponding parts throughout several views, in particular in Fig. 1, a copier includes

a base engine and image data control unit (BiCU) 10. Also included are an operation unit 21, a reading section 22, a writing section 23, peripherals 24, a scanner driving mechanism 25, a plotter driving mechanism 26, and a parallel bus 50 each connected to the image data control unit (BiCU) 10. The copier also includes a controller board (CTN) 60 as an expansion unit connected to the parallel bus 50 mentioned later. The copier also employs an application unit. Thus, the copier can function as a facsimile, a scanner, a printer, etc., beside a copier. The copier independently operates when the CTN 60 is not connected thereto. In such a situation, some of devices including the parallel bus 50 substantially do not function to correspond to connection of the expansion unit. Thus, it is one of features of the present invention to readily correspond to sophisticated expansion of functions while enabling an independent operation by employing these devices.

Each of sections of the copier is now described in detail with reference to Fig. 1. The BiCU 10 includes a process controller 11, a RAM 12, a ROM 13, an input/output control section (GATEX) 14, and a video control section (SCRATCH) 30. These devices are connected to each other via a CPU bus 15. A memory module 20 is connected to the video control section 30. The process controller 11 is formed from a CPU and serves as a local control device functioning as a control device generally controlling the entire copier when the copier independently operates. The process controller 11 performs a control operation by executing control program stored in the ROM 13. In particular, when the copier independently operates, the process controller 11 controls an operation of an operation unit 21, receives operational instructions therefrom, and controls the copier to operate in accordance with the operational instructions.

The RAM 12 is a memory used as a work area for the process controller 11. The ROM 13 is a memory storing control program that the process controller 11 executes. If a rewritable memory is used as the ROM, the control program can be easily updated. The input/output control section 14 serves as a unit that controls outputting of a driving signal to each of driving systems and inputting of a detection signal from each of sensors or the like. The process controller 11 monitors and controls each of units on driving via the input/output control section 14. The memory module 20 employs a memory of the DIMM (Dual in Line Memory Module) standard, for example, so as to store image data read by the reading section 22.

Further, the operation unit 21 is formed from a liquid crystal display, a touch panel laminated thereon, and various operation keys, thereby serving as a unit operating the copier. Then, the operation unit 21 is connected to a serial port 39 arranged in a CPU peripheral control section 38 of a later described video control section 30, and is further connected to the process controller 11 via a serial port 39. The reading section 22 serves as an image reading device optically reading an image of an original document. Specifically, a light is irradiated from a light source to the original document. The reflected light is condensed by mirrors and lenses on a photo acceptance unit and is converted into electric signals. The electric signals are then converted into digital image data and input to the video control section 30. The photo acceptance unit can employ any one of a charge coupled device (CCD) and a contact image sensor (CIS). Depending upon a type of the photo acceptance unit, an output form of image data is different as mentioned later.

The writing section 23 serves as an image-forming device forming an image on a sheet in accordance with image data transmitted from the video control section 30. The writing section 23 typically employs an image-forming device of an electro photograph system having a laser diode (LD) as a light source. The peripherals 24 serve as a unit feeding and ejecting sheets during image formation in the writing section 23, and sorting and stapling the sheets after formation of images thereon. The scanner driving mechanism 25 and plotter driving mechanism 26 serve as units mechanically driving the reading and writing sections 22 and 23, respectively.

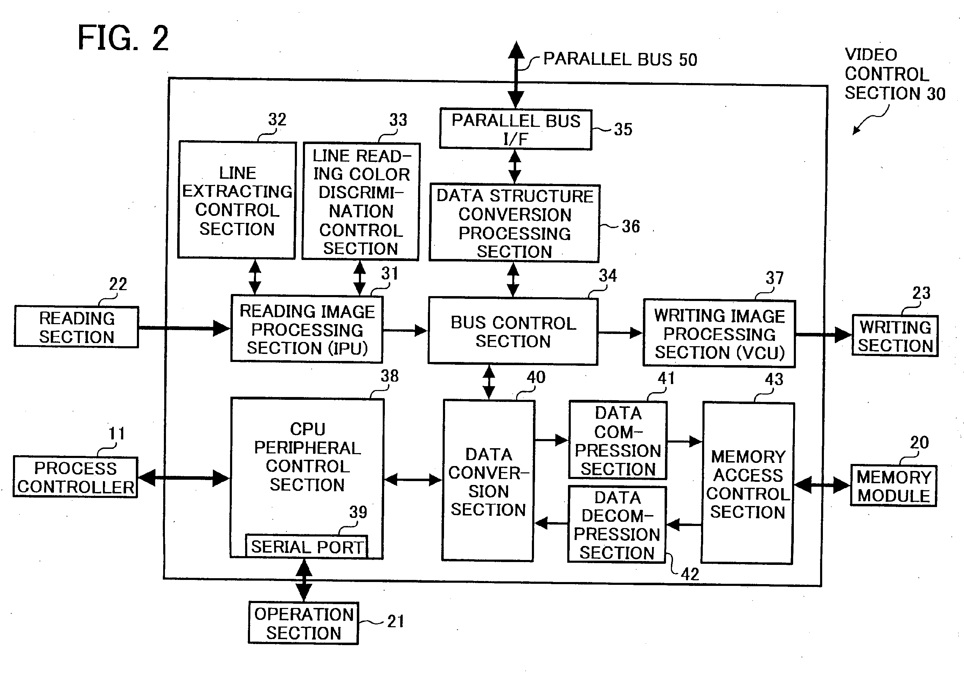

The video control section 30 is now described more in detail with reference to Fig. 2. The video control section 30 includes a read image processing section (IPU) 31, a line extraction control section 32, a line reading color identification control section 33, a bus control section 34, a parallel bus interface (I/F) 35, a data structure conversion processing section 36, a write image processing section (VCU) 37, a CPU peripheral control section 38, a data conversion section 38, a data compression section 41, a data decompression section 42, and a memory access control section 43. The IPU 31 serves as a read image processing device applying shading correction, MTF correction, density conversion, gradation processing, and magnification processing or the like to image data input from the reading section 22. The IPU 31 can be formed from a high-speed hardware or a programmable processor.

A line extraction operation unit 32 serves as a device applying extraction processing of a line in a sub scanning direction to image data input to the IPU 31. For example, as mentioned later, when an expansion unit is connected to a copier including a facsimile function, and image data read by the reading section 22 is to be transmitted by the facsimile function, it is sometimes necessitated to decrease a resolution level of an image that has been read. That is, even though a resolution of transmission image data is 200 dpi according to the facsimile standard, that of around 600 dpi is widely used as reading density of a scanner forming the reading section 22.

In such a situation, a density in the main scanning direction decreases through a magnification operation of the IPU 31. Line extraction is performed in the sub-scanning direction and a number of lines are converted as mentioned later so that a prescribed line density can be obtained.

The line reading color identification control section 33 serves as a color identification data addition device that determines a color of an image currently processed among image data input to the IPU, and adds color identification data representing the color to the image data. When a color CCD is used, image data of RBG are simultaneously read. In contrast, when a color CIS is used, R, B, and G lights are sequentially irradiated per a line in order to read each color image data, thereby image data of the R, G, and B are transferred in this order. Even though, since a portion and color of the image data can be recognized when color identification data is added to image data by the line reading color identification control section 33, the image data are similarly stored in a memory per a color plane regardless of that the photo acceptance unit type as mentioned later. Further, when monochrome reading is performed by either the CCD or CIS, since data is similarly transferred per a line, color identification data does need to be added.

A bus control section 34 serves as a bus control device that controls streaming of data within the video control section 30 and selects a transfer destination of the data in accordance with a type of the data. Specifically, the bus control section 34 designates a transfer destination of data input from the parallel bus I/F 35 via the data structure conversion processing section 36 and that input from the IPU 31 and data conversion section 40 under control of the process controller 11, and then controls data streaming within the video control section 30. For example, when the controller board (CTN) described later is connected to the parallel bus 50 as a data transfer device, image data and control command directed to the process controller 11 are transmitted from the CTN. However, the bus control section 34 controls data streaming in a manner such that the image data is transferred to the VCU 37, and the control command is transferred to the process controller 11 via the data conversion section 40 and CPU peripheral control section 38. Since such a control is performed under control of the process controller 11, the process controller 11 can be a portion of the bus control device.

A parallel bus 1/F 35 serves as a bus interface that communicates data via the parallel bus 50. The parallel bus 50 also serves as a bus that connects the CTN 60 as mentioned above. Thus, these parallel bus I/F 35 and parallel bus 50 collectively form an expansion unit-connecting device. However, since none of devices other than the copier is connected to the parallel bus 50 when the copier independently operates, these parallel bus I/F 35 and parallel bus 50 do not operate. A data structure conversion-processing section 36 serves as a device that converts a data structure upon need before data is transmitted to the parallel bus 50 via the parallel bus I/F 35, and after data is received from the parallel bus 50 via the parallel bus I/F 35.

A VCU 37 serves as a write image-processing device that performs a process of converting input image data into a signal driving the writing section 23. The VCU 37 also performs image processing that accompanies the conversion processing. Specifically, jaggy correction, density conversion, pulse width modulation (PWM), image trimming processing or the like are performed. Then, a signal having received the processing is output and drive the writing section 23 so that an image can be formed. The writing section 23 is typically an image-forming device employing an electro-photographic system. Thus, an output of the VCU 37 servers as a signal driving and causing the LD driver so as to activate an LD so as to form a latent image on an image carrier. A CPU peripheral control section 38 serves as a device that transfers control command to a process controller 11 via the CPU bus 15. The CPU peripheral control section 38 includes a serial port 39 as an operation unit connection device, and functions to mediate communications of operational and display/control signals between the operation unit connected to the serial port 39 and the process controller 11.

A data conversion section 40 serves as a device that separates input data into image data and control command, and distributes and transfers the control command to the CPU peripheral control section 38, and the image data to a data compression section 41. Further, the data conversion section 40 also performs a process of adding information representing a storage address in a memory module 20 to a head of image data of each line in accordance with color identification data added by the line reading color identification control section 33. Thus, the image data can be stored in the memory module 20 per a color plane.

A data compression section 41 serves as a device that performs a coding process before storing image data in the memory module 20. A data decompression section 42 is a device that decodes data when coded data is read from the memory module 20, and converts it into original image data. A memory access control section 43 serves as a device that reads and writes data from and to the memory module 20 while designating an address. The memory access control section 43 writes image data having received data compression processing from the data compression section 41 in a prescribed address when storing the image data in the memory module 20. In contrast, when the image data is read, the memory access control section 43 reads data from a prescribed address of the memory module 20. The data decompression section 42 then converts it into the original image data.

Further, the memory access control section 43 can be used when image processing is performed using memory module as a work memory. For example, when rotational processing is applied to an image, the memory access control section 43 writes image data again in the work area of the memory module 20 without coding thereof after the data decompression section reads data and converts it into image data, and reads while changing a read address. Thus, image data of a rotated image can be obtained. Further, the memory module 20 is detached to an image memory connection section included in the memory access control section 43 and its capacity is changeable in accordance with use. The data compression section 41, the data decompression section 42, and the memory access control section 43 can be integrated in a unit with the memory module 20. Further, an image memory connection section can be arranged in the data conversion section 40 and attached thereto.

Further, the video control section 30 includes the read image-processing device, the write image-processing device, a supervising device supervising input and output data to and from the local control device, and the bus interface. The video control section 30 is preferably made into one chip. As a result, a number of BiCU and cost can be suppressed, and credibility can be enhanced. Further, power consumption can be suppressed to be less than when the video control section 30 is formed from plural chips. Further, only the data compression section 41, data decompression section 42, and memory access control section 43 are integrally made into a unit with the memory module 20, and the other sections of the video control section 30 can be separated on different chips.

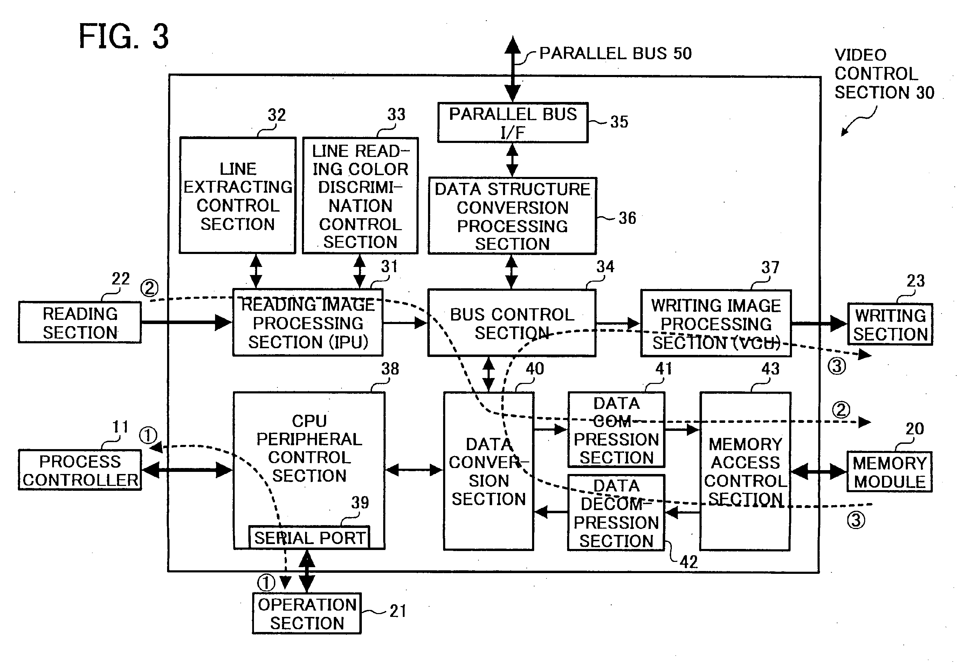

An outline operation of such a copier is now described with reference to Fig. 3. Initially, the process controller 11 controls the operation unit 21 via the CPU peripheral control section 38 as illustrated by an arrow in Fig. 3 so that a user can set and designate a copying function. Since a menu is needless to provide for the purpose of allowing designation of an operation of the below described expansion function, load of control on the operation unit 21 is relatively small.

Upon receiving an instruction to execute a copying operation from the operation unit 21, the process controller 11 controls each of sections to operate and copy. Specifically, an original document is initially optically read by the reading section 22 and is converted into an electric signal to be image data, and then receives image processing for a reading process from the IPU 31 as illustrated by an arrow 2. Then, the image data receives an extraction process from the line extraction control section 32 upon need, and color identification information is added thereto by the line reading color identification control section 33. Then, such image data is transferred to the bus control section 34.

Further, in order to execute backup sheet jam or the like, even if a number of copying sheets is only one and thus storage thereof in a memory is not always needed, Image formation is performed after once storing the image data in the memory. Then, upon receiving image data read and transferred to come, the bus control section 34 transfers the image data to the data conversion section 40 in order to store the image data in the memory module 20. After that, the data conversion section 40 adds write address information to the image data and transfers it to the data compression section 41. Then, the image data receives a coding process to be code data, and is written and stored in an address of the memory module 20 by the memory access control section 43 in accordance with the address information.

Then, as illustrated by an arrow 3, coda data stored in the memory module 20 is read from a prescribed address by the memory access control section 43, and is converted into image data by the data decompression section 42. Then, the data is input to the VCU 37 via the data conversion section 40 and bus control section 34. The VCU 37 applies image processing for a writing process to the image data, and converts into a signal driving the LD driver of the writing section 23. Then, such a signal drives the LD driver, and an LD writes a latent image on the surface of the PC member. By developing the latent image and fixing thus visualize image, an image can be formed in accordance with read image data on a sheet.

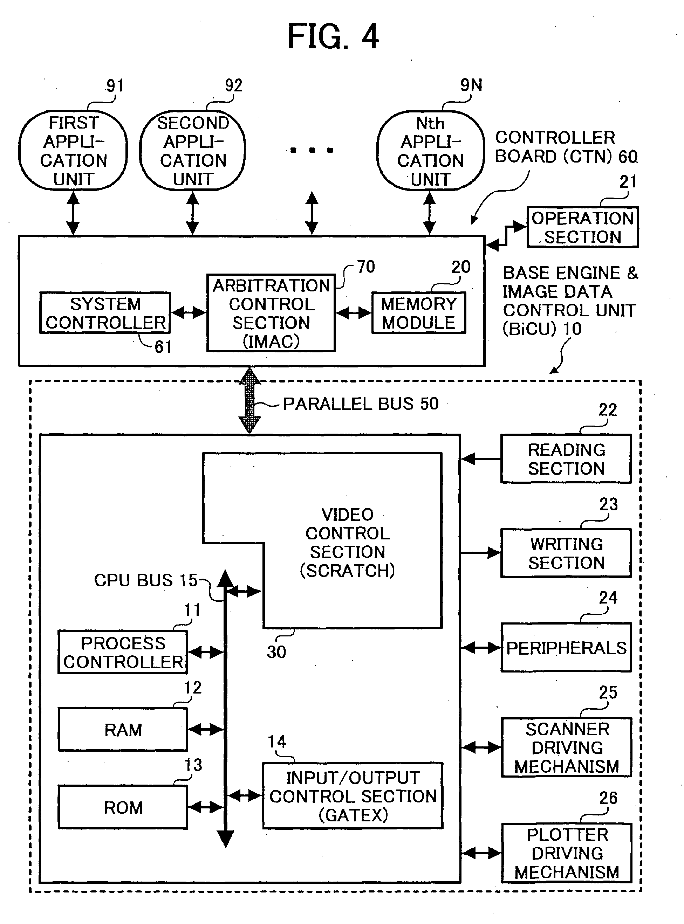

A digital multi functional printer (copier) as one example of an image forming apparatus formed from the above-mentioned copier and an expansion unit connected thereto is now described with reference to Figs. 4 to 9.

Such an MFP includes a controller board (CTN) 60 as an expansion unit connected to the parallel bus 50 of the copier described with reference to Fig. 1, and some of applications 91 to 9n connected to the CTN 60 as illustrated in Fig. 4. The memory module 20 arranged in the BiCU 10 is detached and moved onto the CTN 60. The operation unit 21 also changes its connecting destination from the BiCU 10 to the CTN 60. These movements are performed when a service person or a user connects the CTN 60 to the copier. Further, the operation unit 21 can employ the same unit to that utilized when the copier independently operates. However, when operating as an MFP, since a number of required keys is larger and display contents are more complex in comparison with those when a copier independently operates, for example, the operation unit is preferably replaced with a multi-functional one including a large scale display panel, an address input mechanism on a network, and a facsimile use address allocation button or the like.

The application units 91 to 9n serve as a function adding unit that adds various functions, such as a facsimile function, a printer function, a net file function, a scanner function, a local storage function, a document storage function, a document delivery function, etc. One application essentially corresponds to one function, and is realized by prescribed hardware configured on a substrate. By providing and connecting an application having a necessary function to the CTN 60 serving as a motherboard, the function can be exerted in an image formation system. Further, each of the applications has the same priority in using the resources. Further, applications capable of omitting special interface, and their hardware can be realized by prescribed program and are installed in a non-volatile rewritable memory on the CTN 60. Thus, the image formation system can exert those functions.

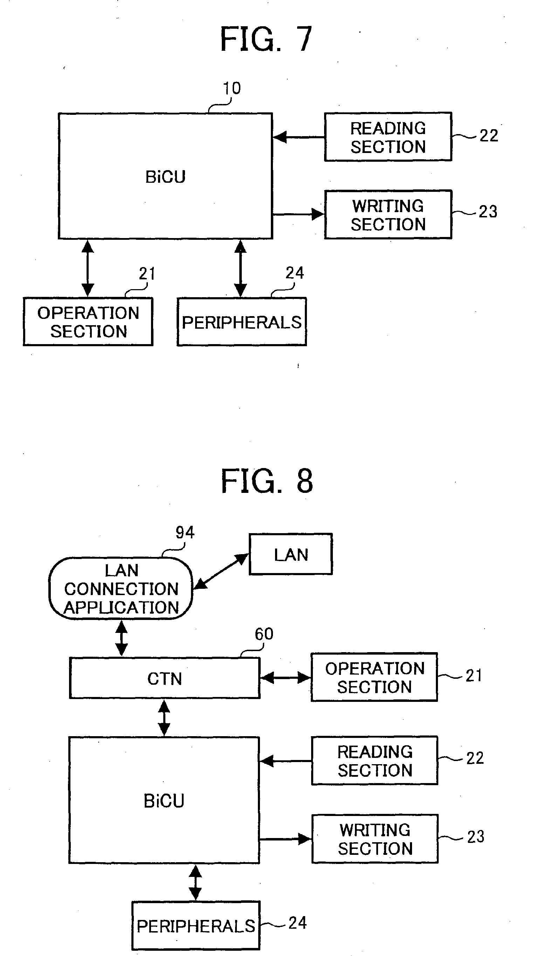

Now, such a functional expansion is described in more detail with reference to Fig. 7. Initially, when a user only needs a copier function as an essential function, the CTN 60 is not connected as illustrated in Fig. 7. Specifically, the operation unit 21, the reading section 22, the writing section 23, and the peripherals 24 or the like are controlled only by the process controller 11. Specifically, the process controller 11 receives an operation instruction and then performs a plurality of processes required in copying, such as image reading, image transfer onto a sheet, transportation of the sheet, etc. Thus, a driving mechanism (not shown) is employed therefor. Since only the copying function is necessitated, the copying function preferably always monopolies resources such as the operation unit 21, the reading section 22, the writing section 23, the peripherals 24, etc. In other words, the CTN 60 that allocates resources is needless.

In contrast, a LAN connection application 94 is additionally employed and exerts a LAN connection function as illustrated in Fig. 8. Such a function deliveries read image data to a LAN and outputs image an image delivered via the LAN and so on, and accordingly requires the resources of the reading section 22 and writing section 23 or the like. Then, the CTN 60 is necessitated to allocate the resources to a LAN connection application 94 and the originally existing copier function handled as one application. Thus, the LAN connection application 94 is added to the CTN 60.

Specifically, a copier portion illustrated in Fig. 7 partially forms the MFP together with the CNT 60 and applications. The reading section 22, writing section 23, peripherals 24 and similar provided there are controlled by a system controller 61 of the CNT 60 as sharing resources for the MFP. An operation unit 21 is also connected to the CNT 60, and is controlled by the system controller 61 as one of the resources. Further, a function of each of the applications is realized under control of the system controller 61 that allocates each of the resources to each of the applications and supervises a job to be executed by each of the resources. During such allocation, the LAN connection application 94 added on and the copying application connected to the engine side are similarly handled. Specifically, no priority of using the resources is given over them. Similarly, no priority is given to a connection order of applications. Thus, the resources are optimally allocated in accordance with an application connection condition during an operation.

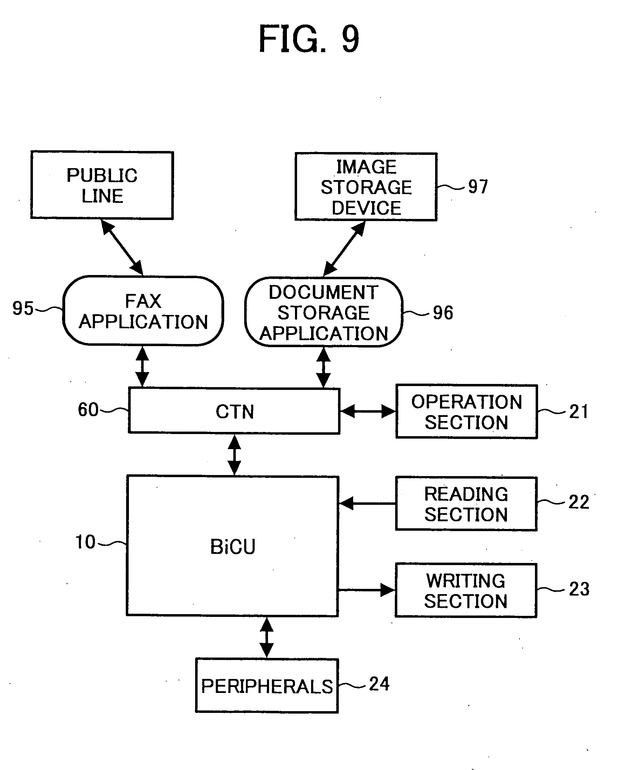

As shown in Fig. 9, an example is illustrated in which a facsimile application 95 and a document storage application 96 are connected to the CTN 60. The facsimile application 95 provides a function of communicating image information via a public line. The document storage application 96 provides a function of storing image data in a local image storage device 97 formed from a large capacity HDD or the like of backup and long time storage use. Even when a plurality of applications is employed in this way, a priority of resource private use is not given over the applications. Further, when the CNT 60 appropriately allocates resources, a plurality of applications can be combined and utilized. For example, when a memory module in the CTN 60 is utilized as a work memory or temporary storage region, and the document storage application 96 can store image data transmitted and received by the facsimile application 95 and those copied by a copier application in the image storage device 97 as digital data, image data can be optionally retrieved and taken out. Further, while the LAN connection application 94 of Fig. 8 is additional connected, data stored therein can be accessed via the LAN.

The MFP illustrated in Fig. 4 is now described. Since a portion of the copier of Figs. 1 to 3 surrounded by a doted line is the same in this example, and thus explanation thereof is omitted. Such a portion is herein after called the copier side of the MFP. The CTN 60 connected to the copier side by the parallel bus 50 includes a system controller 61 and an arbitration control section (IMAC) 70. The memory module 20 moved from the BiCU 10 is connected to the IMAC 70.

The system controller 61 serves as an expansion control device that generally controls the MFP. Also, the system controller 61 can indirectly controls the reading section 22 and writing section 23, included in the copier side, to operate by transmitting control command to the process controller 11 of the BiCU 10 via the parallel bus 50. Further, the system controller 61 handles the reading and writing sections 22 and 23 as resources to be used by applications, supervises jobs executed by the resources, and allocates the resources upon requests from each of the applications. Specifically, by allowing each of the applications to monopoly resources, the function of the application can be exerted in the MFP. Off course, the reading and writing sections 22 and 23 are sometimes allocated to each of applications. Further, the memory module 20 and operation unit 21 moved to the CTN 60 are also handled as one of resources, and are allocated to each of the applications by the system controller 61.

When the copier portion is independently utilized, a copy function realized under the control of the process controller 11 is handled as one of applications of the MFP and is not given a priority over the other applications. Thus, the copy function is realized using a resource allocated by the system controller 61. When the MFP is established by connecting the CTN 60, the process controller 11 does not directly control a copying operation in accordance with an operation instruction transmitted from the operation unit 21. Specifically, the process controller 11 receives control command transmitted through the system controller 61 in response to an operation instruction from the operation unit 21, and drives the reading and writing sections 22 and 23 or the like in accordance therewith.

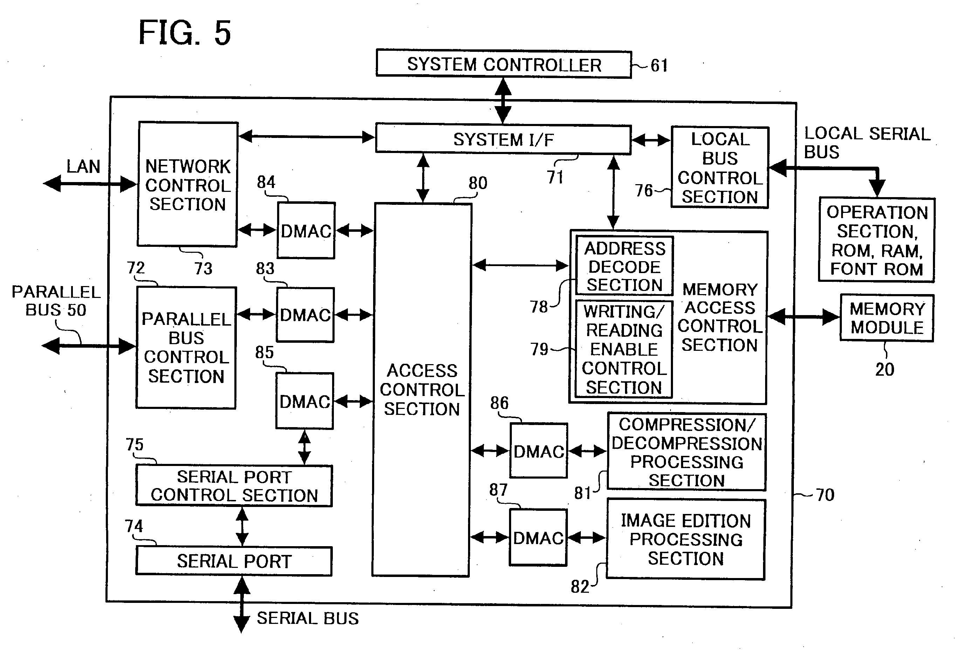

When requests from plural applications are overlapped, the IMAC 70 arbitrates accesses to the memory module 20 and bus, and thereby collaborates and adjusts thereof with the system controller 61. The IMAC 70 is now described more in detail with reference to Fig. 5. The IMAC includes a system I/F 71, a parallel bus control section 72, a network control section 73, a serial port 74, a serial port control section 75, a local bus control section 76, a memory access control section 77, an access control section 80, a compression/decompression processing section 81, an image editing processing section 82, and a plurality of direct memory access controllers (DMAC) 83 to 87.

The system I/F 71 serves as a device that communicates control command and data between the IMAC 70 and system controller 61. The system controller 61 transmits control command directed to the IMAC 70 via the system I/F 71. The IMAC 70 then supervises each of the control sections and processing sections in accordance with such an instruction. The parallel bus control section 72 serves as a device that controls communications of control command and data via the parallel bus 50. Since the copier side unit serving as an engine section for the MFP is connected to the CTN 60□via the parallel bus 50, all of image data read by the reading section 22 and that used in image formation by the writing section 23, and control command transmitted to the process controller 11 so as to drive these devices are necessitated to communicate via the parallel bus 50. Accordingly, the control command and image data can be controlled to stream by enabling the parallel control section 72 to control occupation of the parallel bus 50.

The network control section 73 serves as an interface that controls connection to the local area network (LAN) not shown in Fig. 4, and supervises data communications with external apparatuses connected via the LAN. The system controller 61 is not used in controlling these external apparatuses. However, the system controller 61 controls the network control section 73. The network control section 73 is configured to perform communication control in conformity to the so-called 100 Base-T standard. The serial port 74 serves as an interface connecting to a serial bus and communicates data under control of the serial port control section 75. As shown in the drawing, the serial port 74 and serial port control section 75 are integrally arranged in one block. However, these are practically formed from a plurality of ports, and are enabled to communicate under USB (Universal Serial Bus) and IEEE (Institute of Electrical and Electronic Engineers) 1284 standards.

The local bus control section 76 serves as an interface with the local serial bus, and is connected by a ROM storing control program executed by the system controller 61, a RAM as a working memory for the system controller, and a font ROM storing font data used when a printer function is exerted and printer code data is expanded as a bit map. Further, the operation unit 21 is connected to the local serial bus, and performs communications of data necessary to control, such as transmission of a display/control signal, reception of an operational signal, etc., via the local bus control section 76. All of the local serial bus, ROM, RAM, and font ROM are omitted to illustrate in Fig. 4 for the purpose of simplicity.

The memory access control section 77 serves as a unit that reads and writes data from and to the memory module 20, and includes an address decode section 78 and a write/read enable control section 79. Thus, when the memory access control section 77 transmits writing data to the address decode section 78 while designating a writing address, and transmits a write enable signal to the write/read enable control section 79, the writing data is written in the writing address of the memory module 20. When, a reading process is performed, a read enable signal is preferably transmitted while designating a reading address. Further, the memory access control section 77 can recognize and store image data in the memory module 20, which image data has the same format to that of the image data to be stored in the memory module 20 by the memory access control section 43. Thus, since image data is needless to change its format in accordance with image data storage destination, a process can be simplified.

The system controller 61 controls the memory access control section 77 to operate via the system I/F 71. However, practical reading and writing are controlled by the access control section 80. Specifically, reading and writing from and to the memory module 20 are independently requested from the BiCU 10, connected to the parallel bus 50, via the parallel bus control section 72, and from the external apparatus, connected to the LAN or serial bus, via the network control section 73 and serial port control section 75. Further, accesses are also requested from the compression/decompression section 81 and the image edition processing section 82.

The system controller 61 controls each of the control sections and processing sections to operate. However, requests of accessing to the memory module 20 are transmitted by the DMACs 83 to 87 to the access control section 80 independent from control of the system controller 61. Then, the access control section 80 arbitrates and gives a priority to each of these requests. The DMAC allowed to access reads and writes data from and to the memory module 20 via the memory access control section 77. When print data received from the PC or the like via the LAN or serial bus is expanded as a bit map in the memory module 20 using font data stored in the font ROM, the system I/F 71 requests accessing to the memory module 20. Such an access is also subjected to arbitration by the access control section 80.

It is not illustrated in drawings, but each of the control sections and processing sections are enabled to request the access control section 80 for their access to sections other than the memory access control section 77 by detouring the DMACs 83 to 87. Such a request is arbitrated by the access control section 80 under control of the system controller 61. Further, the above-described compression/decompression processing section 81 serves as a module that compresses and codes image data so that the image data can efficiently be stored in the memory module 20. The module reads and decompresses image data to be original image data. Further, the compression/decompression processing section 81 can compress and decompress the image data temporary read from the memory module 20 so as to write again in the memory module 20 or externally output via the bus or LAN.

The image edition-processing section 82 serves as a module that processes image data stored in the memory module 20, clears a storage region, applies a rotation process to image data, and performs a combination process combining different images. These editions are performed by designating an address in the memory module 20 and converting data of the address. However, since the image edition processing section 82 cannot process code data after its compression and print data before being expanded, a process by the image edition processing section 82 is applied to image data in the form of the bit map before compression.

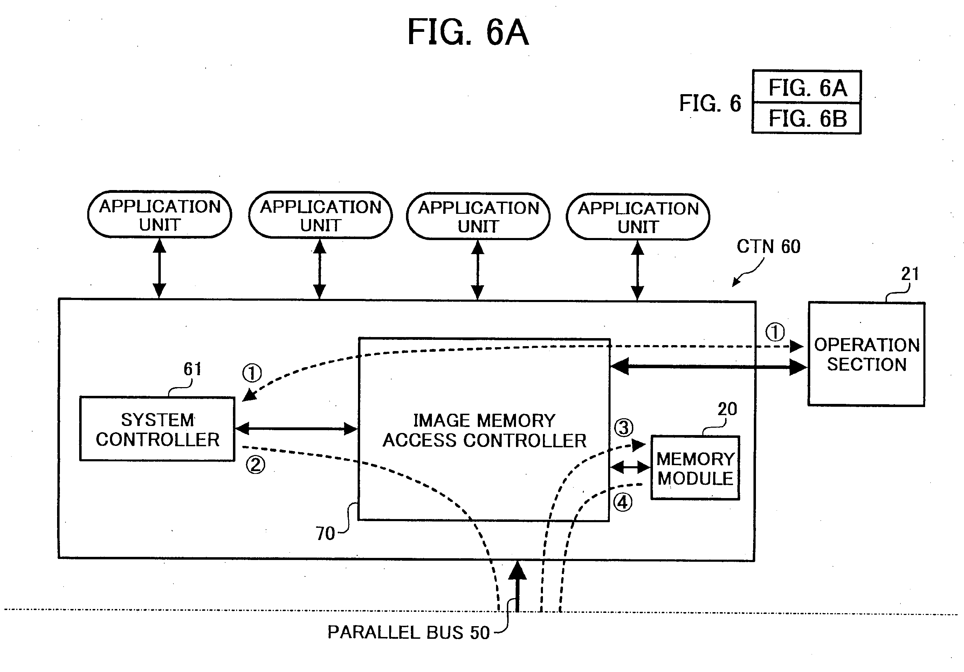

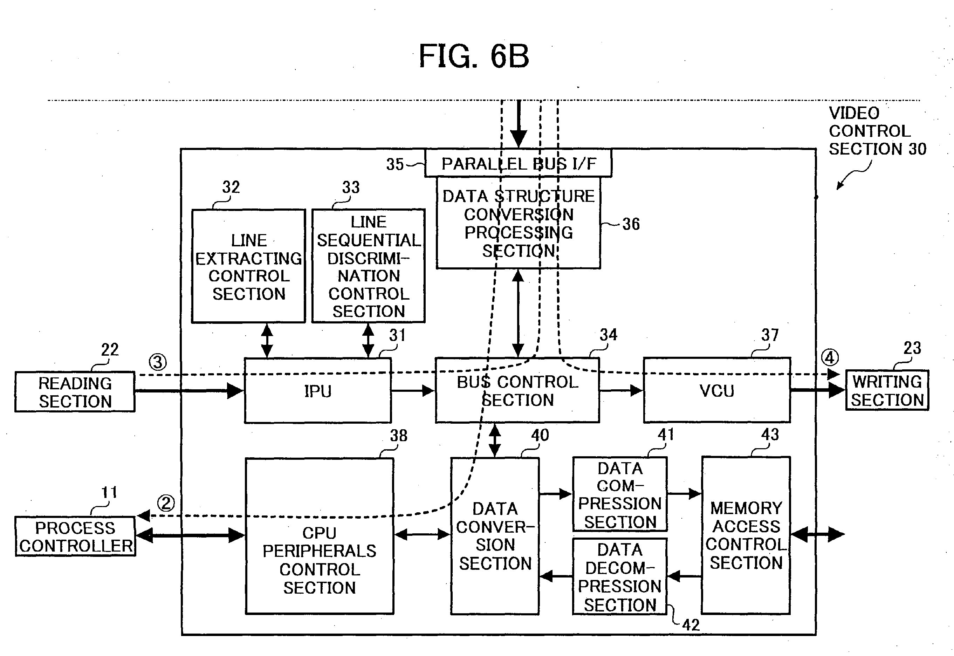

An image forming operation of the above-mentioned MFP is now described with reference to Fig. 6 on condition that a plurality of jobs is not simultaneously requested. Initially, the system controller 61 controls the operation unit 21 via the system I/F 71 and local bus control section 76 as illustrated by an arrow 1 in Fig. 6, so that a user can set and instruct operations of functions corresponding to each of the applications of the MFP.

Upon receiving instruction to copy from the operation unit 21, the system controller 61 allocates the resources of the memory module 20, reading section 22, and writing section 23 or the like to a copy application, and issues control command to the process controller 11 in accordance with the allocation so that the process controller 11 drives each of sections in order to execute a copying job. Then, the control command is launched into the video control section 30 via all of the system I/F 71, parallel control section 72, and parallel bus 50 as illustrated by an arrow 2. In the video control section 30, the control command is transferred to the bus control section 34 via the parallel bus I/F 35 and data construction conversion-processing section 36. Since the data of the control command is distinguished from image data, it is transferred to the CPU peripheral control section 38 from the data conversion section 40, thereby arriving at the process controller 11.

Then, the process controller 11 having received the control command controls each section to operate and perform copying. Initially, the reading section 22 optically reads an original document, converts into an electronic signal to be image data, and performs image processing to read data using the IPU 31 as illustrated by an arrow 3. Then, the line extraction section 32 performs an extraction process upon need. The line reading color identification control section 33 then adds applicable color identification information thereto. After that, the image data is transferred to the bus control section 34. Since the memory module of the BiCU 10 side is withdrawn, and instead, the memory module 20 arranged in the CTN 60 is utilized in the MFP, the image data is transferred by the parallel bus 50 to the CTN 60 to be stored in the memory module 20 via the parallel bus I/F 35 after receiving addition of writing address information in the data structure conversion processing section 36. Then, the image data is input to the parallel bus control section 72, and is processed by the compression/decompression processing section 81, DMAC 86, and memory access control section 77. The image data is then written and stored in an address corresponding to the writing address information in the memory module 20 as coded data. Further, the system controller 61 controls data transfer in the CTN 60 side.

Subsequently, as illustrated by an arrow 4, code data stored in the memory module 20 is read by the memory access control section 77 from a prescribed address, and is expanded by the compression/decompression processing section 81 to be the original image data, and is then transmitted to the video control section 30 via the parallel bus 50 from the parallel bus control section 72. Then, the image data is transferred to the bus control section 34 via the parallel bus I/F35 and data structure conversion processing section 36, and is input to the VCU37 due to its writing use. The VCU 37 applies writing use image processing to the image data and converts it into a signal driving an LD driver of the wiring section 23. Then, the signal drives and causes the LD driver to activate an LD and write a latent image on the PC member. The latent image is then developed and fixed, thereby forming an image on a sheet in accordance with the read image data.

In the above-mentioned process, different from when a copier independently operates, since a memory module of the BiCU 10 side is not used, a transfer route of the read image from the bus control section 34 is different. Further, the process controller 11 does not control the operation unit 21, and instead operates in accordance with control command transmitted from the system controller 61. Thus, the process controller 11 is necessitated to differently control when a copier independently operates from when the CNT 60 is connected and thus an MFP operates.

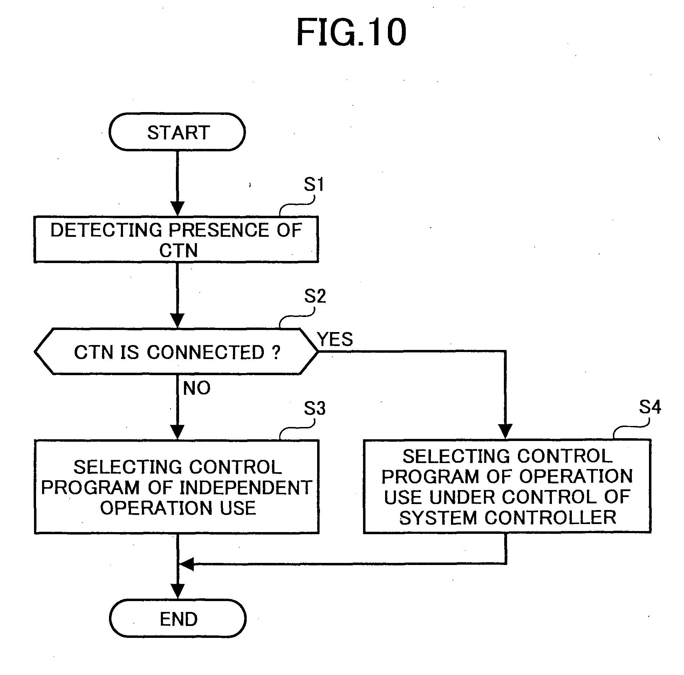

An operation of selecting a control manner in the process controller 11 is now described with reference to Fig. 10. A plurality of control program used by the process controller 11 as a local control deice to control a copier or a copier section of the MFP is stored in the ROM 13 of the above-mentioned copier and MFP.

Specifically, control program of independent copier use is stored so as to control an operation of the operation unit 21, receive an operation instruction from the operation unit 21, and control the copier to operate in accordance with the operation instruction. Also stored is control program of MFP use, which receives control command from the system controller 61 as an expansion control device, and controls a copier section of the MP to operate in accordance with the command.

Accordingly, by executing these control program, the process controller 11 can function both as a device controlling an operation unit connected to the operation unit connecting device to operate, and as a device receiving control command from the expansion control device of the expansion unit connected to the expansion unit connecting device. However, one of control program used by the process controller 11 is selected depending upon presence of connection of the CTN 60 as an expansion unit, in this example.

Specifically, the process controller 11 executes prescribed start program stored in the ROM when a copier or MFP is started, and performs such selection by performing the process of Fig. 10. Specifically, it is initially detected if the CTN 60 is connected (in step S1). The detection can be performed by checking if any one of units is connected to the parallel bus 50 as an expansion unit-connecting device, for example. Further, since the operation unit 21 is connected to the local serial bus of the CNT 60, and not to the serial port 39 of the video control section 30 as an operation unit connecting device when the CNT 60 is connected, it can be concluded that the CNT 60 is not connected if the operation unit 21 is connected to the serial port 39. In contrast, it can be concluded that the CNT 60 is connected if the operation unit 21 is not connected thereto. Otherwise, it can be determined if the CNT 60 exists by referring to a memory switch (not shown) or similar which is previously set. Thus, the process controller 11 functions as an expansion unit-detecting device during a process of step S1.

Subsequently, it is determined if the CNT 60 is connected in accordance with a detection result of the step S1 in step S2. If it is negative, the process goes to step S3. Then, control program independently operating a copier is selected, thereby terminating the process. In contrast, if the CNT 60 is connected, the process goes to step S4. Then, control program of MFP use is selected to operate the MFP under control of the system controller 61. In these processes of the steps S2 to S4, the process controller 11 functions as a control program-selecting device.

When the processes shown in the flowchart of Fig. 10 are completed, operations of the reading section 22 and writing section 23 as a part of the independently operating copier or MFP and so on can be controlled by executing the control program selected by the process controller 11. Thus, both of an independent operation performed on condition that the CTN 60 is not connected thereto, and an operation performed as a resource on condition that the CTN 60 is connected can be enabled. Accordingly, the CTN 60 is needless when only the essential function of the copier is needed. In addition, an image reading device and image formation device can be shared by a plurality of applications as resources upon need, and thereby the function can be expanded. Further, essential functions of a copier can be provided at low cost.

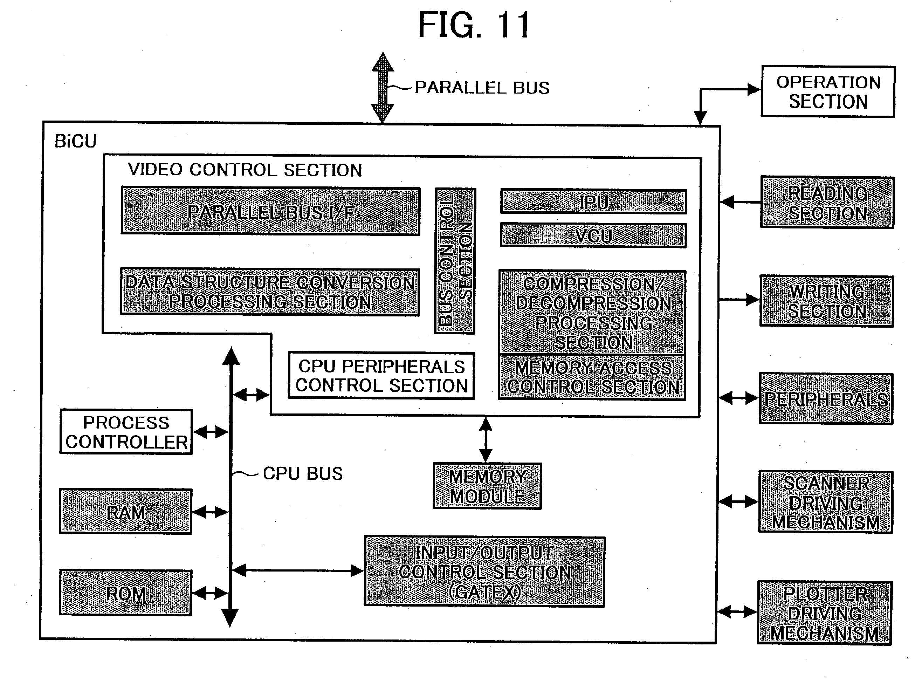

An operation of a power supply saving mode employed in the above-mentioned copier or MFP is now described with reference to Figs. 11 to 13. The above-mentioned copier or MFP moves to a power supply saving mode so as to suppress power consumption when none of operations and jobs are executed. The power supply saving mode receives only an operation instruction from the operation unit 21 and a request of executing a job from the external apparatus. Thus, the power supply saving mode performs a necessary process by returning to a normal operation mode upon receiving the operation instruction and execution request.

In such a power saving mode, when a copier independently operates as illustrated in Fig. 1, since the external apparatus and line do not request a job, only an operation instruction is preferably received while monitoring the operation unit 21. Accordingly, only the operation unit 21, CPU peripheral control section 38 of the video control section 30, CPU bus 15, and process controller 11 each required for the above-mentioned operation are operated, and the other portions drawn by slanting lines in Fig. 11 are stopped operating when an independent unit such as a memory module 20, a reading section 22, a writing section, etc., is stopped supplying power. If there exist portions to be operated and stopped within one module such as the video control section 30, generation of clocks for the portions to be stopped their operation is stopped.

When an MFP operates as illustrated in Fig. 4, since job execution, such as facsimile reception, outputting of an image delivered via a LAN, etc., is possibly externally requested, each of the applications needs to be monitored beside the operation unit 21. Accordingly, during the power saving mode, portions needed be monitored are only operated, and remaining portions are stopped operating. Specifically, the memory module 20 and memory access control section 77 of the IMAC 70 are needless to operate in the CTN 60 and are thus stopped. All of the system controller 61 that performs monitoring, access control section 80 of the IMAC 70, each of buses, LAN, and control section of the serial port are operated. Further, one or more minimum modules of the applications, which are connected to the outside such as a public line, LAN, etc., and are required to receive job requests are maintained to operate. An application such as a document storage application 96 connecting to a local apparatus illustrated in Fig. 9 is stopped operating.

Further, when a copier section is utilized as a part of the MFP, it does not receive an operation instruction from the operation unit. However, the copier section is preferably enabled to receive control command from the system controller 61. Then, the process controller 11 receiving the control command, the parallel bus I/F 35 serving as a route for transferring the control command transmitted via the parallel bus 50 to the process controller 11, the data structure conversion processing section 36, bus control section 34, data conversion section 40, CPU peripheral control section 38, and CPU bus 15 are operated. The other sections drawn by slanting lines in Fig. 11 are stopped operating. Further, the system controller 61 only controls supplying power to the CTN 60. Commands indicating movement to a power supply saving mode are launched to the other units so as to move the other units to the mode. Accordingly, the process controller 11 takes charge of controlling power supply in the copier section. Stoppage of an operation of a circuit due to stoppage of clocks is similarly performed. Thus, operational load on the system controller 61 can be relieved.

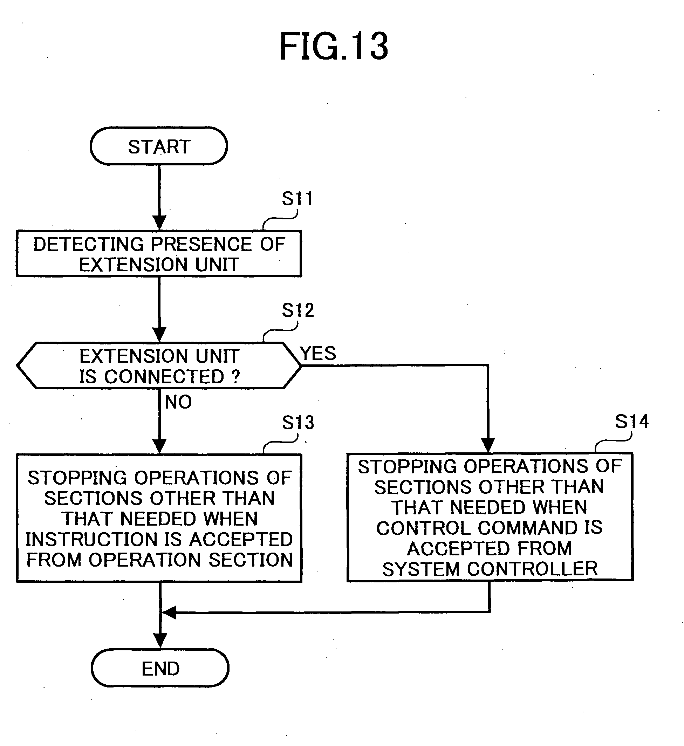

When paying attention to an operation of the copier side, sections to operate during a power saving mode are different from those when the copier operates independently and as a part of the MFP. To realize such control, the process controller 11 executes prescribed control program and thereby performs processes shown in Fig. 13 when the copier side is moved to a power saving mode. Specifically, it is detected if the CTN 60 is connected in step S11. The detection can be similarly performed to that in step S1 of Fig. 10. Thus, the process controller 11 functions as an expansion unit-detecting device in the process of step S11.

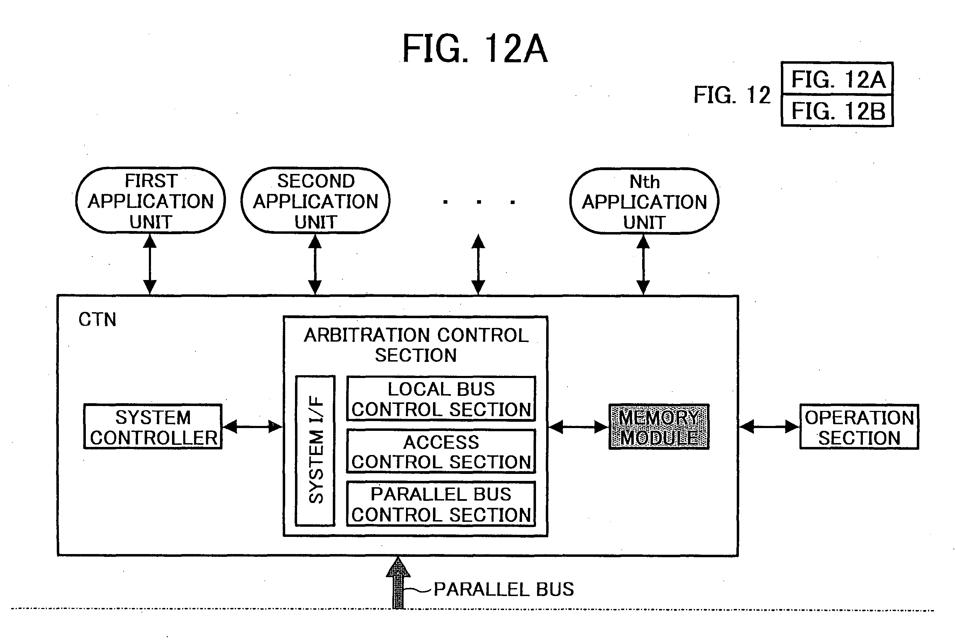

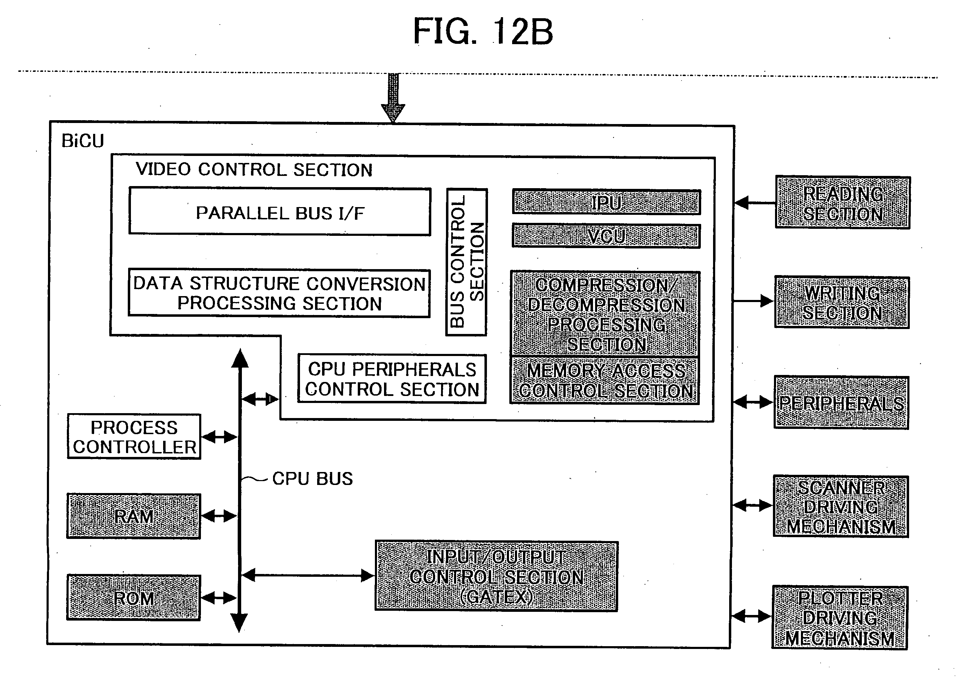

Subsequently, it is determined if the CTN 60 is connected in accordance with the detection result of step S11 in step S12. If it is positive, the process goes to step S13. Then, sections other than those needed to receive an instruction from the operation unit are stopped operating. Thereby, the process is terminated. In contrast, if it is negative, the process goes to step S14. Then, sections other than those needed to receive control command from the system controller 61 are stopped operating. Thereby, the process is terminated. Sections to practically stop operating are similar to those described with reference to Figs. 11 and 12. The process controller 11 functions as a power saving mode-moving device in these steps S12 to S14.

By performing such processes, only minimum sections are operated both when a copier is operated independently and as a part of an MFP, thereby power consumption can be suppressed. Further, when control program to be executed by the process controller 11 is changed from when the copier independently operates to when it operates as a part of an MFP as mentioned above, a process of moving to a power saving mode adopted to an environment in which the control program is used can be built in the respective control program.

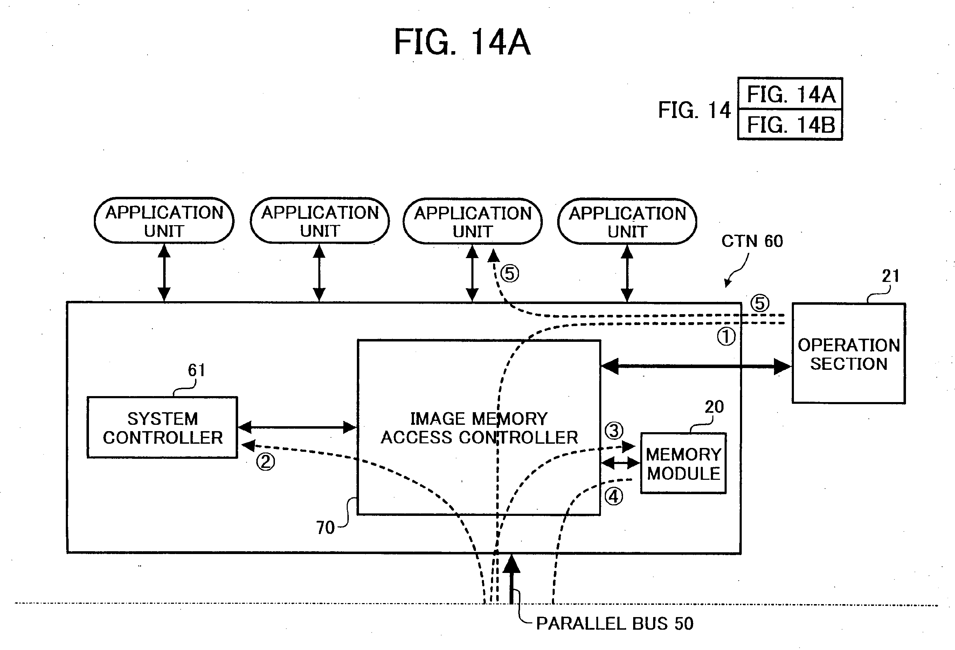

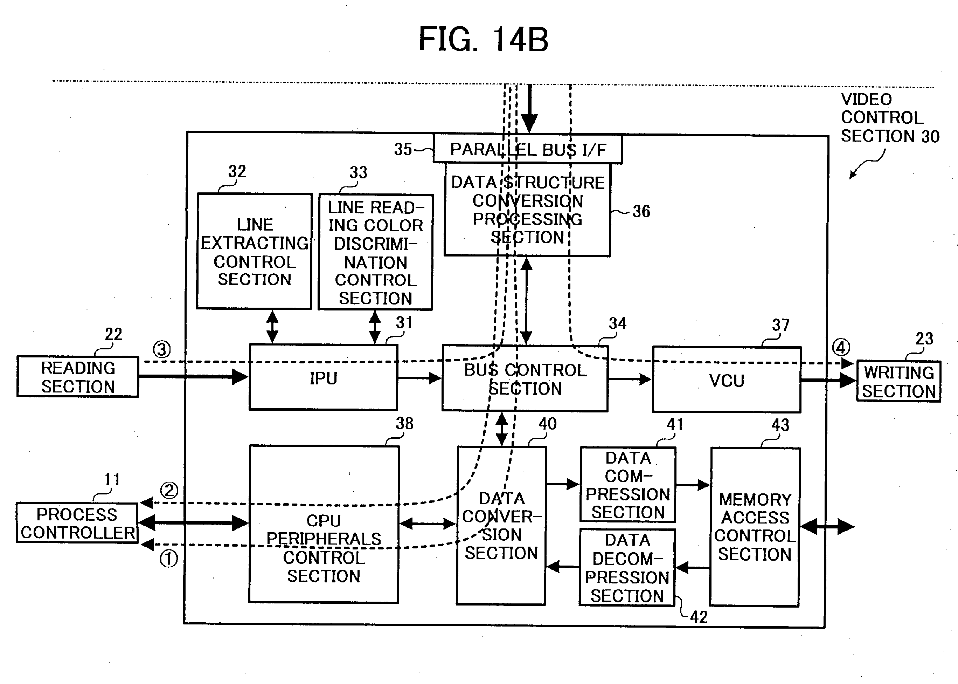

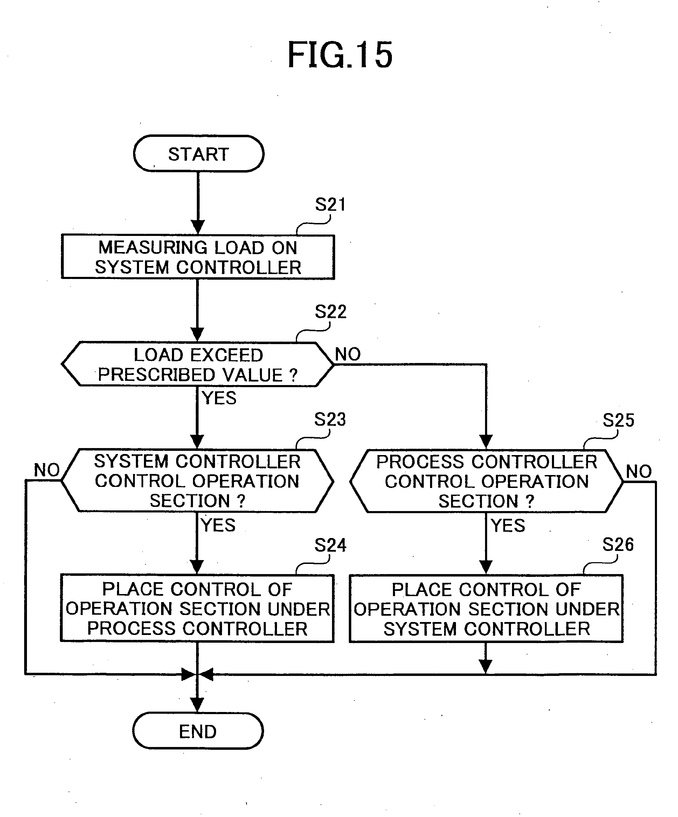

A modification of controlling the operation unit 21 in the MFP of Figs. 4 and 5 is now described with reference to Figs. 14 and 15. The system controller 61 (i.e., the first control device) takes charge of controlling the operation unit 21 connected to the CTN 60 in the above-described MFP. In such an example, however, a device (i.e., a second control device) is provided also in the process controller 11 so as to control the operation unit 21, so that one of the control devices can alternatively control the operation unit 21. The system controller 61 serving as an operation unit control device selecting device takes charge of such switching.

Specifically, since the operation unit 21 is connected to the CTN 60, it is preferable due to shorter length of a route transmitting a control signal that the system controller 61 arranged in the CTN 60 controls applicable devices. However, since the system controller 61 has a lot of objectives to control such as allocation of resources to applications, bus occupation control in the IMAC 70 and similar, control operations of the system controller 61 are delayed, and a processing speed of image data possibly decreases when significantly a large number of applications is connected or so. Then, control of the operation unit 21 is placed under control of the process controller 11, so that load on the system controller 61 can be relieved.

Since the process controller 11 serves as a control device generally controlling the entire copier when the copier independently operates, the process controller 11 can afford to process when a copier function is used as a part of the MFP that is generally controlled by the system controller 61. Further, since the process controller 11 also serves as a control device controlling the operation unit 21 when the copier independently operates, its function can be partially used when controlling the operation unit 21 in the MFP. Accordingly, when the process controller 11 also takes charge of controlling the operation unit 21, since a number of newly necessitated structural elements for it are small, such a construction is beneficial. Thus, since general controlling operation of the MFP can be practiced without hitch even when the system controller 61 has not so high processing capability, the CTN 60 and the image forming system can be constructed at low cost.

Data streaming in the MFP when the process controller 11 controls the operation unit 21 is described with reference to Fig. 14. The process controller 11 and the operation unit 21 communicate operation signals and display/control signals with each other via a route shown by an arrow 1. Operation signals, for example, are transmitted from the operation unit 21 to the parallel bus 50 via the local bus control section 76, system I/F 71, access control section 80, and parallel bus control section 72. Then, the parallel bus I/F 35 receives the operation signals. Then, they are transferred to the bus control section 34 via the data structure conversion-processing section 36. Since the data are not image data and operation signals, they are further transferred to the CPU peripheral control section 38 from the data conversion section 40, and arrive at the process controller 11. The display signal and control signal transmitted from the process controller 11 to operation unit 21 flow back through the route.

Since the process controller 11 controls the operation unit 21 and does not generally control the MFP, when an operation signal requesting any setting change or execution of jobs, which cannot be dealt by simply changing display such as cursor movement, is transmitted from the operation unit 21, the process controller 11 transmits a signal representing such effect to the system controller 61. Such a route is illustrated by an arrow 2, and is the same to the route of the arrow 1 up to the system I/F 71, and is only different therefrom such that the signal is transferred from the system I/F 71 to the system controller 61.

When such a signal indicates a copying request, for example, the system controller 61 allocates resources of the memory module 20, reading section 22, writing section 23 or the like to the copy applications, and issues control commands and causes the process controller 11 to drive each of the sections to perform a copying job in accordance with the allocations. Then, the process controller 11 having received the control command controls each of the sections to operate and perform copying as described earlier with reference to Fig. 6. Further, when image reading by the scanner application, for example, is requested, image data stored in the memory module 20 is output through a route shown by an arrow 3 via an application per a color plane.

Further, in order to select one of the system controller 61 and process controller 11 each controlling the operation unit 21, in the MFP, a memory switch or the like can be previously set so as to select one of them at the time of starting an operation. However, It is more preferably selected in accordance with processing load on the system controller 61. Such setting can be performed when the system controller 61 executes a process shown in Fig. 15 at an appropriate time. Specifically, the processing load on the system controller 61 is initially measured in step S21. Then, it is determined if the processing load exceeds a prescribed amount in step S22.

If the processing load exceeds the prescribed amount in step S22, the process goes to step S23. Then, it is determined if the system controller 61 controls the operation unit 21. If the system controller 61 controls the operation unit 21, the control is placed under the process controller 11 due to excessive load, and the processing is terminated. In contrast, if the system controller 61 does not control the operation unit 21, the processing is terminated as it is because the control has already been placed under the process controller 11. If it does not exceed the prescribed amount in step S22, since the system controller 61 can afford to process, the process goes to step S25. Then, it is determined if the process controller 11 controls the operation unit 21. If the process controller 11 controls the operation unit 21, the process goes to step S26 and the control is placed under the system controller 61, thereby terminating the processing. In contrast, if the process controller 11 does not control the operation unit 21, the processing is terminated as it is, because the control has already been placed under the system controller 61.

Accordingly, by performing these processes in such a way, when load on the system controller 61 increases, control of the operation unit 21 can be placed under the process controller 11, and when the system controller 61 can afford processing, the system controller 61 control the operation unit 21. As a result, data bus can be suppressed to be needlessly complex. Further, since a level of processing load on the system controller 61 largely relies upon a number of applications as function added units connected to the CTN 60, a controller to control the operation unit 21 can be selected in accordance with the number of applications.

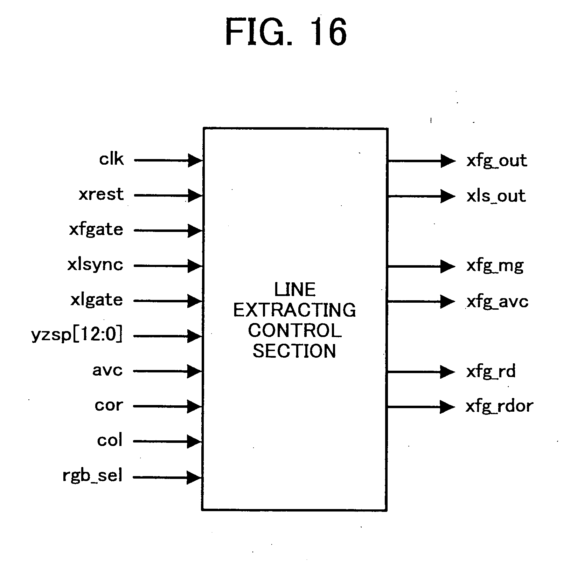

A line extraction process and a line reading color identification process performed by a copier and a copier section of the MFP described with reference to Figs. 1 to 5, are now described with reference to Figs. 16 to 21.

The signal illustrated in Fig. 16 is used in a line extraction process performed by the line extraction control section 32 of Fig. 2. However, the line extraction process performed here does not extract just image data. Specifically, the line extraction process negates a line gate signal xlgate representing a valid range of image data of one line within a range where an image is extracted. The line gate signal maintains to be asserted within the valid image range. Further, if a write enable signal is controlled not to occur within the range where a line gate signal xlgate is negated when image data is to be written in the memory module 20, for example, image data of an extracted line is not written in the memory module 20. As a result, extraction effect can be obtained.

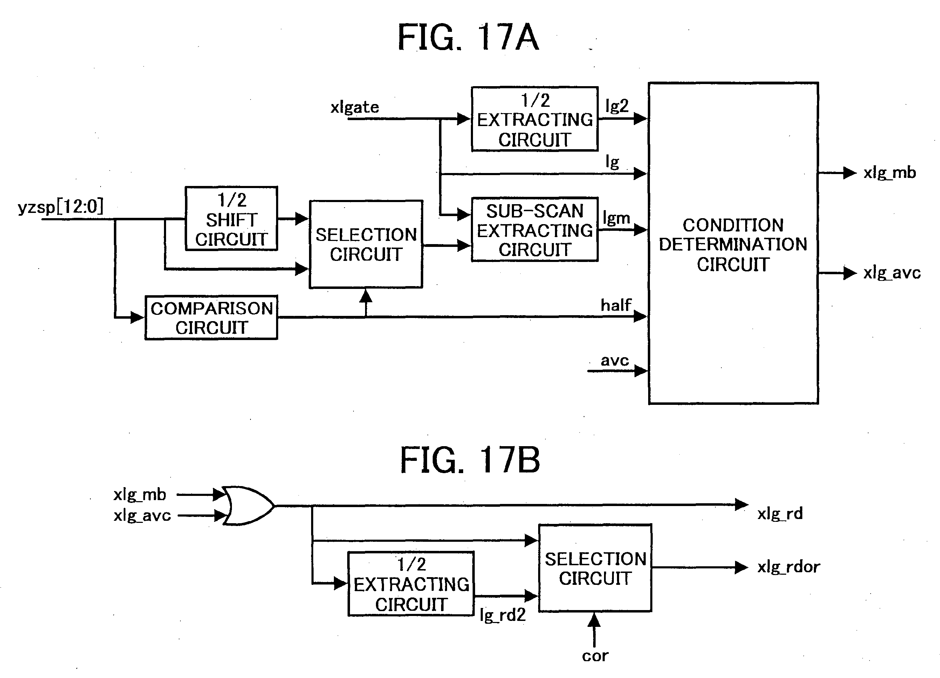

Further, among the line extraction processes, there exit two types of the process. One is applied to multi value image data, the other is applied to binary image data. The line extraction process applied to the multi value image data is controlled by xlg-mb and xlg-avc signals. The line extraction process applied to the binary value image data is controlled by xlg-rd and xlg-rdor signals. Specifically, these signals are generated by a circuit shown in Fig. 17. These xlg-mb and xlg-avc signals are obtained when a condition determining circuit selects appropriate one or more signals among an lg2-signal obtained by negating a line gate signal xlgate by 1/2, an 1g-signal of an xlgate signal as it is, and an lgm signal negating the xlgate signal so that it is S % or 2S % in a sub scan extraction circuit in accordance with a condition if a reduction rate S % represented by a register yzsp exceeds 50 %. Further, the xlg-rd signal is obtained as an output from an OR gate when these xlg-mb and xlg-avc signals are input thereto. The xlg-rdor signal is obtained by selecting an appropriate signal between the xlg-rd signal and an lg-rd2 obtained by negating the xlg-rd signal by 1/2.

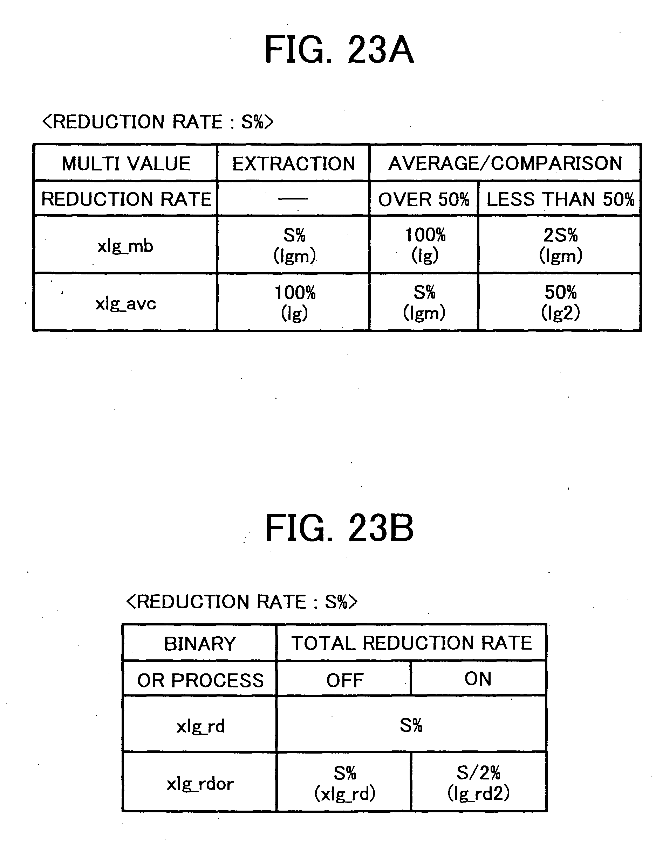

Further, there exist two types of the multi extraction processes. One is a simple line extracting process, and the other accompanies an average/comparison process to neighboring lines. Then, any one of types is used so that a desired reduction rate (S%, e.g. 78%) can be obtained. For the binary extraction, different gate control signals are alternatively utilized in accordance with execution of a conditional OR process applied to neighboring lines. Specifically, when the conditional OR process is not applied, the line gate signal xlgate is controlled so that a multi and binary total sub scan direction reduction rate can be S %. When the conditional OR process is applied, since such a process itself is equivalent to a 50 % reduction process, an xlg-rd signal of S % reduction is utilized as an input line gate signal before the conditional OR process. Further, an xlg-rdor signal of S/2 % reduction is utilized as an input line gate signal after the conditional OR process. A relation of a type of an extraction process and a usage signal is shown in tables of Figs. 23A and 23B.

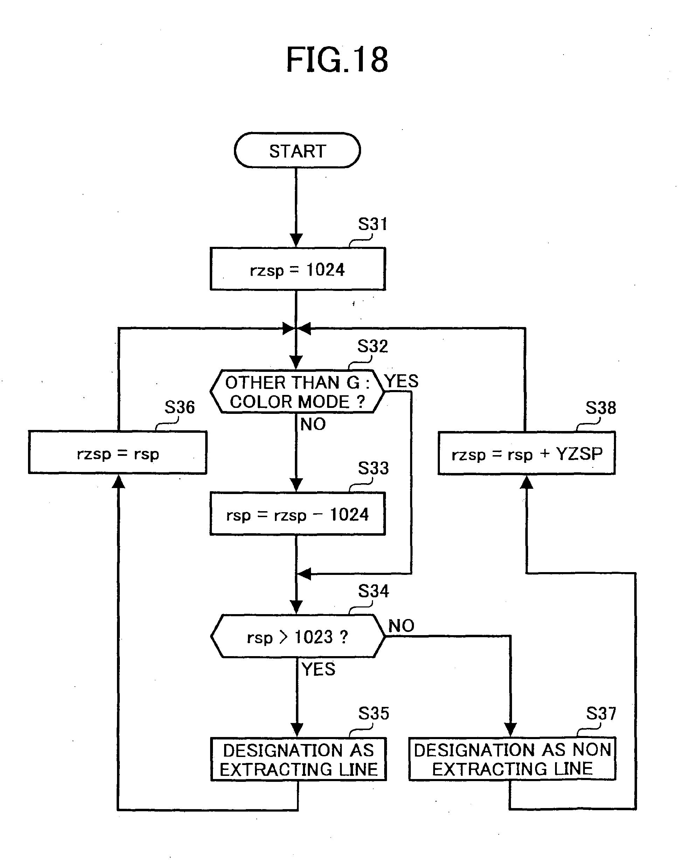

An extraction process performed by a sub scan extraction circuit is now described with reference to Fig. 17. The sub scan extraction circuit is a circuit that performs a process shown in Fig. 18. Specifically, it is a circuit that either negates and designates an input line gate signal xlgate as an extraction line or maintains to be asserted and not designates that as an extraction line per one line. A parameter YZSP appearing on a flowchart of Fig. 18 determines a reduction rate at 1024/YZSP. The YZSP is determined within a range from 1024 to 8191. Accordingly, the reduction rate ranges from 12.5 to 100%. A resolution level is almost 0.1%. When it is reduced to be one third (1/3), for example, 3072 that is three times of rzsp is preferably set to the YZSP.

Such a process is now described in more detail on condition that a copier operates in a monochrome mode and YZSP is 3072. In such a process, a value of rzsp is initially determined as 1024 in step S31. Then, it is determined if the mode is color and the color is other than G with reference to criterion mentioned later in step S32. Since it is negative (i.e., NO), the process goes to step S33. An rsp is sought in step S33. Specifically, the rzsp is calculated as follows and thus, the rsp is smaller than 1023 (i.e., rsp < 1023) in the next step S34, the first line is designated as none extraction line and a line gate signal xlgate is maintained to be asserted in step S37:

$$Rzsp-1024 = 1024-1024 = 0$$

Then, the process goes to step S38, and the rzsp is calculated as follows:

$$rzsp=rsp+YZSP=0+3072=3072$$

Then, the process goes from step S32 to step S33 at a time for the next second line, and the rsp is calculated as follows:

$$rzsp=rsp-1024=3072-1024=2048$$

Since the rsp is larger than 1023 (i.e., rsp > 1023) in step S34 this time, the process goes to step S35. Then, the second line is designated as an extraction line, and thus, the line gate signal xlgate is negated. Then, the process goes to step S36, and the rzsp is calculated as follows.

$$rzsp = rsp = 2048$$

The same process is repeated for the third and subsequent lines. However, since rzsp is calculated as follows in the third line, it is designated as an extraction line:

$$rsp = 2048 - 1024 = 1024 > 1023$$

Since rsp is calculated as follows in the fourth line, it is designated as none extraction line;

$$rsp = 2048 - 1024 - 1024 = 0 < 1023$$

Accordingly, the two lines among three lines can be designated as extraction lines by the processing.

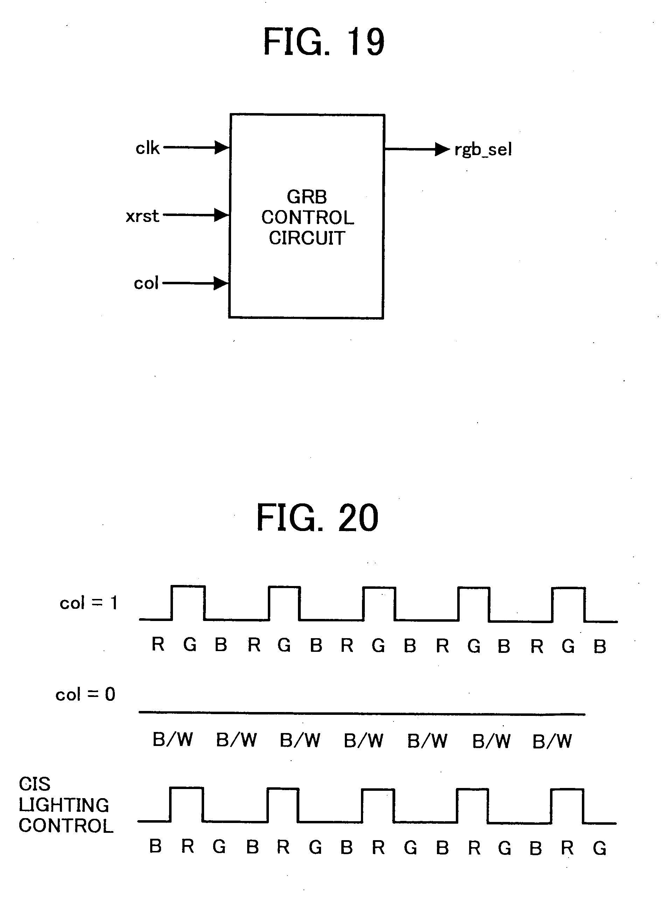

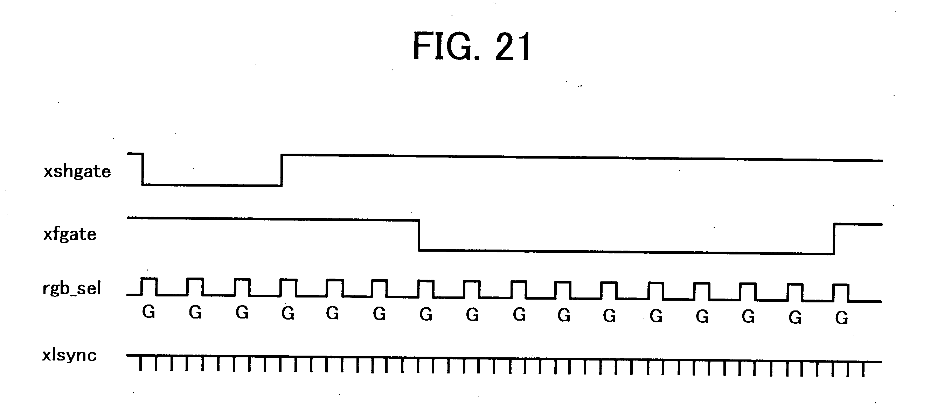

Further, a signal illustrated in Fig. 19 is used in a line reading color identification process performed by a line reading color identification processing section 33 illustrated in Fig. 2. Specifically, a col-signal is represented by '1' when a color reading is performed by a CIS as a photo acceptance unit of the reading section 22. As mentioned above, since each of image data of R, G, and B is separately read from the same line and transferred in this order, a rgb-sel signal is set to '1' as illustrated in Fig. 20 at a transfer time for the G-image data, and '0' at transfer times for image data of B and R. Specifically, the rgb-sel signal represents color identification information. Then, an assert position of an xfgate signal representing a sub scan start position, i.e., a head of each of image frames, is adjusted to a G-line as illustrated in Fig. 21. As shown in Fig. 21, an xlsync signal represents a line synchronous signal.

Further, lighting of each of light souses for RGB is controlled earlier by one line than a time when image data is transferred. Specifically, as illustrated in Fig. 20, the light source of R is driven to light at the time the G-image data is transferred. An rgb-sel signal is always set to '0' in the monochrome process. Such an rgb-sel signal is used in determination performed in step S33 of Fig. 18, for example. Specifically, if the col signal is set to '1' and rgb-sel signal is set to '0', it is determined that a color mode is set and the color is other than G. Then, in the case of the color mode, designation of extraction and none extraction to a line other than the G line is the same to that of the G line, and the same extraction is performed per a color plane. Further, when an extraction process performing an average/comparison process applying between neighboring lines is performed, the same color data of a line forwarding or back warding by one line is searched with reference to the rgb-sel signal, and the average/comparison process is performed together with the data.

Further, when image data obtained by the color CIAS is stored in the memory module connected to the BiCU 10, a process is performed such that the data conversion section 40 adds information representing a storage address of the memory module to a head of the image data of each of the lines in accordance with the rgb-sel signals. When the CTN 60 is connected and image data is stored in the memory module arranged in the CTN 60, the data structure conversion processing section 36 adds the storage address information. Thus, image data of respective RGB colors separately transferred in this order can be stored in a memory module 20 per a color plane. When, it is used in image formation and image processing, image data can be readily read per a color plane.

Further, when color reading is performed using a CCD as the photo acceptance unit of the reading section 22, each of image data can be read in parallel at once. Thus, if these three colors image data are temporary stored, and are output one by one in the RGB order, and color identification information is similarly added to the case of the CIS, image data can be stored in the memory module 20 per a color plane as similar to the case of the CIS. Since a necessary image bus width is the same to that of the CIS, e.g. 8-bit width, a system does not increase in a size. Further, when image bus of 8 bits x 3 channels, for example, enough to simultaneously transfer three color image data, is employed, and if three lines of image data of RGB are stored and then these three line RGB image data are packed in block, respectively, and the color identification information are added thereto as similar to the case of CIS, these can be stored similarly in the memory module 20 per a color plane. Accordingly, image data can be stored in a memory per a color plane in the same manner regardless of a type of a photo acceptance unit.

Mechanisms and processes set forth in the present invention may be implemented using one or more conventional general-purpose microprocessors and/or signal processors programmed according to the teachings in the present specification as will be appreciated by those skilled in the relevant arts. Appropriate software coding can readily be prepared by skilled programmers based on the teachings of the present disclosure, as will also be apparent to those skilled in the relevant arts. However, as will be readily apparent to those skilled in the art, the present invention also may be implemented by the preparation of application-specific integrated circuits by interconnecting an appropriate network of conventional component circuits or by a combination thereof with one or more conventional general purpose microprocessors and/or signal processors programmed accordingly. The present invention thus also includes a computer-based product which may be hosted on a storage medium and include, but is not limited to, any type of disk including floppy disks, optical disks, CD-ROMs, magnet-optical disks, ROMs, RAMs, EPROMs, EEPROMs, flash memory, magnetic or optical cards, or any type of media suitable for storing electronic instructions.

Numerous additional modifications and variations of the present invention are possible in light of the above teachings. It is therefore to be understood that within the scope of the appended claims, the present invention may be practiced otherwise than as specifically described herein.

**Claims**

1. An image forming apparatus, comprising:

   an image-reading device configured to read an image of an original document;
   an image forming device configured to form an image on a sheet in accordance with image data read by the image reading device;
   an operation unit connecting device (30) configured to detachably connect an operation unit (21), said operation unit being configured to accept inputting of operational instructions operating the image forming apparatus;
   a process controller (11) configured to control the image forming apparatus to operate;
   an expansion unit connecting device (50, 35) configured to connect an additionally attachable expansion unit (60), said expansion unit including an expanded operation control device (61) configured to allocates the image reading device or image forming device to a job;

   wherein said process controller controls the operation unit to operate and receives control command from the expansion control device to perform image formation.

2. The image forming apparatus according to claim 1, wherein said process control device including;

   a memory configured to store at least two control programs controlling the image forming apparatus;
   an extension unit detecting device (30) configured to detect presence of connection of the extension unit; and

   a control program selecting device (11) configured to select applicable control program to be used by the process controller in accordance with the detection result of the extension unit detecting device.

3. The image forming apparatus according to claim 1, further comprising:

   an extension unit detecting device configured to detect presence of connection of the extension unit; and
   a power saving mode setting device configured to set a power saving mode to the image forming apparatus; wherein said power saving mode setting device determines sections of the image forming apparatus to operate under the power saving mode in accordance the detection result of the extension unit detecting device.

4. The image forming apparatus according to any one of claims 2 and 3, wherein said extension unit detecting device detects presence of connection of the expansion unit by determining if any one of units (60, 91 to 9N) is connected to the expansion unit connecting device.

5. The image forming apparatus according to any one of claims 2 and 3, wherein said extension unit detecting device detects the presence of the connection of the extension unit by determining that the extension unit is connected when the operation unit is not connected to the operation unit connecting device; and that the extension unit is not connected when the operation unit is connected to the operation unit connecting device.

6. The image forming apparatus according to any one of claims 1 to 5, wherein the extension unit connecting device (50, 35) includes a data transferring device (36) configured to communicate image data and control command with the expansion unit, and a bus selecting device (34) configured to select a data transfer destination in accordance with a type of the data received by the data transferring device.

7. The image forming apparatus according to any one of claims 1 to 6, wherein the image reading device includes a contact image sensor, and said image forming apparatus including a color identification data adding device configured to add color identification data to image data read by the contact image sensor, said color identification data indicating a location and color component.

8. The image forming apparatus according to any one of claims 1 to 7, further comprising:

a read image data processing device configured to apply image processing to image data read by the image reading device;

a write image data processing device configured to convert the image data into a signal driving the image forming apparatus and configured to apply image processing to the signal necessitated along with the converting process; and

a supervising device configured to supervise data input and output to and from the process controller;

wherein said extension unit connecting device includes a bus configured to communicate data and a bus interface for the bus, and

wherein at least the read image processing device, the write image processing device, the supervising device, the bus interface, and the bus selecting device are arranged on a same chip.

9. An image forming system, comprising:

an image forming apparatus as claimed in any one of claims 1 to 8.

10. The image forming system according to claim 9, wherein said operation unit controlling the image forming system is connected to the expansion unit;

said expansion control device of the expansion unit includes a first control device configured to control the operation unit to operate; and

said process control device of the image forming apparatus includes a second control device configured to control the operation unit to operate; and

said image forming system further comprising an operation unit control device selecting device configured to select one of the first and second control devices.

11. The image forming system according to claim 9, wherein said operation unit control device selecting device performs said selection in accordance with processing load on the extension control device.

12. The image forming system according to claim 10, wherein said expansion unit is configured to engage with at least one function adding unit, said at least one function adding unit adding at least one function to the image forming system under control of the expansion control device; and said operation unit control device selecting device performs said selection in accordance with a number of function adding units connected to the expansion unit.

13. The image forming system according to any one of claims 9 to 12, wherein said expansion unit includes a first image memory configured to store image data; said image forming apparatus includes an image memory connecting device configured to connect a second image memory configured to store image data; and wherein said expansion unit includes a storage control device configured to recognize and store image data having the same format to that to be stored in the second image memory in the first memory.

14. The image forming system according to any one of claims 9 to 13, wherein said expansion control device controls the expansion unit only when power is to be supplied to the expansion unit.

15. A method for controlling an image forming apparatus, comprising the steps of:

storing at least one control program in a memory, said at least one control program being used by a process control device to control the image forming apparatus to operate; detecting presence of connection of an expansion unit; selecting control program used by the process control device in accordance with the detection result; and controlling the image forming apparatus using the selected control program.

16. The method according to claim 15, further comprising the steps of:

detecting presence of connection of the expansion unit when the image forming apparatus is operated in a power saving mode; and setting a range of the image forming apparatus to be controlled under the power saving mode.

17. The method according to any one of claims 15 and 16, wherein said step of detecting presence of connection of the expansion unit is performed by detecting if any one of units is connected to the expansion unit connecting device.

18. The method according to any one of claims 15 and 16, wherein said step of detecting presence of connection of the expansion unit is performed by determining that the expansion unit is connected, if the operation unit is not connected to the operation unit connecting device, and that the expansion unit is not connected, if the operation unit is connected to the operation unit connecting device.

19. A computer readable recording medium storing program, said program performing when read by a computer of the image forming apparatus as claimed in claim 2 the steps of; ☐

detecting presence of the expansion unit; and selecting control program to be used in accordance with the detection result.

**20.** A computer readable recording medium storing program, said program performing when read by a computer of the image forming apparatus as claimed in claim 3 the steps of; □

detecting presence of the expansion unit; setting a range of the image forming apparatus to be operated under a power saving mode in accordance with the detection result; and moving an operation mode of the image forming apparatus to the power saving mode.

**21.** The computer readable recording medium as claimed in any one of claims 19 ad 20, said step of detecting presence of the expansion unit is performed by detecting if any one of units is connected to the expansion unit connecting device.

**22.** The computer readable recording medium as claimed in any one of claims 19 ad 20, said step of detecting presence of the expansion unit is performed by determining that the expansion unit is connected if the operation unit is not connected to the operation unit connecting device, and that the expansion unit is not connected if the operation unit is connected to the operation unit connecting device.

**23.** A method for controlling the image forming apparatus as claimed in claim 1, comprising the steps of:

receiving an operation instruction from the operation unit with the process control device, and controlling the image forming apparatus to operate in accordance with the operation instruction when the expansion unit is not connected to the image forming apparatus, and controlling the image forming apparatus to operate with the process control device in accordance with command received from the expansion control device when the expansion unit is connected to the image forming apparatus.

# FIG. 1

BASE ENGINE &
IMAGE DATA
CONTROL UNIT
(BiCU) 10

PARALLEL BUS 50

21
OPERATION SECTION

22
READING SECTION

CPU BUS 15

VIDEO CONTROL SECTION (SCRATCH)

23
WRITING SECTION

11
PROCESS CONTROLLER

30

20

24
PERIPHERALS

12
RAM

MEMORY MODULE

25
SCANNER DRIVING MECHANISM

14
INPUT/OUTPUT CONTROL SECTION (GATEX)

13
ROM

26
PLOTTER DRIVING MECHANISM

# FIG. 2

VIDEO CONTROL SECTION 30

PARALLEL BUS 50

- PARALLEL BUS I/F — 35
- DATA STRUCTURE CONVERSION PROCESSING SECTION — 36
- BUS CONTROL SECTION — 34
- WRITING IMAGE PROCESSING SECTION (VCU) — 37
- WRITING SECTION — 23

- LINE EXTRACTING CONTROL SECTION — 32
- LINE READING COLOR DISCRIMINATION CONTROL SECTION — 33
- READING IMAGE PROCESSING SECTION (IPU) — 31
- READING SECTION — 22

- DATA CONVERSION SECTION — 40
- DATA COMPRESSION SECTION — 41
- DATA DECOMPRESSION SECTION — 42
- MEMORY ACCESS CONTROL SECTION — 43
- MEMORY MODULE — 20

- CPU PERIPHERAL CONTROL SECTION — 38
- SERIAL PORT — 39
- OPERATION SECTION — 21
- PROCESS CONTROLLER — 11

# FIG. 3

Block diagram showing VIDEO CONTROL SECTION 30 with components: PARALLEL BUS 50, PARALLEL BUS I/F (35), LINE EXTRACTING CONTROL SECTION (32), LINE READING COLOR DISCRIMINATION CONTROL SECTION (33), DATA STRUCTURE CONVERSION PROCESSING SECTION (36), READING SECTION (22), READING IMAGE PROCESSING SECTION (IPU) (31), BUS CONTROL SECTION (34), WRITING IMAGE PROCESSING SECTION (VCU) (37), WRITING SECTION (23), CPU PERIPHERAL CONTROL SECTION (38), SERIAL PORT (39), PROCESS CONTROLLER (11), DATA CONVERSION SECTION (40), DATA COMPRESSION SECTION (41), DATA DECOMPRESSION SECTION (42), MEMORY ACCESS CONTROL SECTION (43), MEMORY MODULE (20), OPERATION SECTION (21).

EP 1 387 567 A2

# FIG. 4

91 FIRST APPLI-CATION UNIT

92 SECOND APPLI-CATION UNIT

. . .

9N Nth APPLI-CATION UNIT

CONTROLLER BOARD (CTN) 60

21 OPERATION SECTION

BASE ENGINE & IMAGE DATA CONTROL UNIT (BiCU) 10

SYSTEM CONTROLLER 61

ARBITRATION CONTROL SECTION (IMAC) 70

MEMORY MODULE 20

PARALLEL BUS 50

VIDEO CONTROL SECTION (SCRATCH) 30

CPU BUS 15

PROCESS CONTROLLER 11

RAM 12

ROM 13

INPUT/OUTPUT CONTROL SECTION (GATEX) 14

READING SECTION 22

WRITING SECTION 23

PERIPHERALS 24

SCANNER DRIVING MECHANISM 25

PLOTTER DRIVING MECHANISM 26

**FIG. 5**

FIG. 6A

FIG. 6

| FIG. 6A |
|---------|
| FIG. 6B |

CTN 60

APPLICATION UNIT

APPLICATION UNIT

APPLICATION UNIT

APPLICATION UNIT

OPERATION SECTION — 21

①

IMAGE MEMORY ACCESS CONTROLLER

MEMORY MODULE — 20

③

④

70

SYSTEM CONTROLLER

61

①

②

PARALLEL BUS 50

# FIG. 6B

VIDEO CONTROL SECTION 30

35 — PARALLEL BUS I/F

32 LINE EXTRACTING CONTROL SECTION

33 LINE SEQUENTIAL DISCRIMINATION CONTROL SECTION

DATA STRUCTURE CONVERSION PROCESSING SECTION — 36

22 READING SECTION

③

31 IPU

34 BUS CONTROL SECTION

37 VCU

④

23 WRITING SECTION

38 CPU PERIPHERALS CONTROL SECTION

40 DATA CONVERSION SECTION

41 DATA COMPRESSION SECTION

43 MEMORY ACCESS CONTROL SECTION

42 DATA DECOMPRESSION SECTION

11 ② PROCESS CONTROLLER

EP 1 387 567 A2

# FIG. 7

# FIG. 8

# FIG. 9

# FIG.10

```
           ┌──────────┐
           │  START   │
           └────┬─────┘
                │
                ▼                    S1
      ┌─────────────────────┐
      │ DETECTING PRESENCE  │
      │      OF CTN         │
      └─────────┬───────────┘
                │
                ▼                    S2
                                         YES
      ◁─────────────────────────▷──────────────┐
      │  CTN IS CONNECTED ?      │              │
      ◁─────────┬────────────────▷              │
                │ NO                            │
                │              S3               │           S4
                ▼                               ▼
      ┌─────────────────────┐        ┌─────────────────────┐
      │ SELECTING CONTROL   │        │ SELECTING CONTROL   │
      │ PROGRAM OF          │        │ PROGRAM OF          │
      │ INDEPENDENT         │        │ OPERATION USE UNDER │
      │ OPERATION USE       │        │ CONTROL OF SYSTEM   │
      │                     │        │ CONTROLLER          │
      └─────────┬───────────┘        └─────────┬───────────┘
                │◄────────────────────────────┘
                ▼
           ┌──────────┐
           │   END    │
           └──────────┘
```

# FIG. 11

PARALLEL BUS

OPERATION SECTION

BiCU

VIDEO CONTROL SECTION

PARALLEL BUS I/F

IPU

VCU

BUS CONTROL SECTION

DATA STRUCTURE CONVERSION PROCESSING SECTION

COMPRESSION/ DECOMPRESSION PROCESSING SECTION

CPU PERIPHERALS CONTROL SECTION

MEMORY ACCESS CONTROL SECTION

PROCESS CONTROLLER

CPU BUS

MEMORY MODULE

RAM

ROM

INPUT/OUTPUT CONTROL SECTION (GATEX)

READING SECTION

WRITING SECTION

PERIPHERALS

SCANNER DRIVING MECHANISM

PLOTTER DRIVING MECHANISM

# FIG. 12A

FIG. 12

| FIG. 12A |
|----------|
| FIG. 12B |

EP 1 387 567 A2

FIRST APPLICATION UNIT

SECOND APPLICATION UNIT

· · ·

Nth APPLICATION UNIT

**CTN**

ARBITRATION CONTROL SECTION

SYSTEM I/F

SYSTEM CONTROLLER

LOCAL BUS CONTROL SECTION

ACCESS CONTROL SECTION

PARALLEL BUS CONTROL SECTION

MEMORY MODULE

OPERATION SECTION

PARALLEL BUS

# FIG. 12B

BiCU

VIDEO CONTROL SECTION

PARALLEL BUS I/F

DATA STRUCTURE CONVERSION PROCESSING SECTION

BUS CONTROL SECTION

IPU

VCU

COMPRESSION/ DECOMPRESSION PROCESSING SECTION

CPU PERIPHERALS CONTROL SECTION

MEMORY ACCESS CONTROL SECTION

PROCESS CONTROLLER

CPU BUS

RAM

ROM

INPUT/OUTPUT CONTROL SECTION (GATEX)

READING SECTION

WRITING SECTION

PERIPHERALS

SCANNER DRIVING MECHANISM

PLOTTER DRIVING MECHANISM

EP 1 387 567 A2

# FIG.13

```
                    ┌─────────────┐
                    │   START     │
                    └──────┬──────┘
                           │
                           │            S11
                           ▼
        ┌──────────────────────────────────┐
        │   DETECTING PRESENCE OF           │
        │   EXTENSION UNIT                  │
        └──────────────────┬───────────────┘
                           │
                           │            S12
                           ▼
              ╱─────────────────────╲         YES
             ⟨   EXTENSION UNIT      ⟩─────────────────┐
              ╲  IS CONNECTED ?     ╱                  │
                └─────────┬─────────┘                  │
                        NO│                            │
                          │         S13                │          S14
                          ▼                            ▼
        ┌──────────────────────────┐    ┌──────────────────────────┐
        │ STOPPING OPERATIONS OF   │    │ STOPPING OPERATIONS OF   │
        │ SECTIONS OTHER THAN      │    │ SECTIONS OTHER THAN      │
        │ THAT NEEDED WHEN         │    │ THAT NEEDED WHEN         │
        │ INSTRUCTION IS ACCEPTED  │    │ CONTROL COMMAND IS       │
        │ FROM OPERATION SECTION   │    │ ACCEPTED FROM            │
        │                          │    │ SYSTEM CONTROLLER        │
        └──────────────┬───────────┘    └────────────┬─────────────┘
                       │                              │
                       │◄─────────────────────────────┘
                       │
                       ▼
               ┌──────────────┐
               │     END      │
               └──────────────┘
```

FIG. 14A

FIG. 14

| FIG. 14A |
|---|
| FIG. 14B |

FIG. 14A

# FIG. 14B

VIDEO CONTROL SECTION 30

35 — PARALLEL BUS I/F

36 — DATA STRUCTURE CONVERSION PROCESSING SECTION

32 — LINE EXTRACTING CONTROL SECTION

33 — LINE READING COLOR DISCRIMINATION CONTROL SECTION

22 — READING SECTION

31 — IPU

34 — BUS CONTROL SECTION

37 — VCU

23 — WRITING SECTION

11 — PROCESS CONTROLLER

38 — CPU PERIPHERALS CONTROL SECTION

40 — DATA CONVERSION SECTION

41 — DATA COMPRESSION SECTION

42 — DATA DECOMPRESSION SECTION

43 — MEMORY ACCESS CONTROL SECTION

EP 1 387 567 A2

# FIG.15

START

↓

MEASURING LOAD ON
SYSTEM CONTROLLER — S21

↓

LOAD EXCEED
PRESCRIBED VALUE ? — S22 ——NO——→

YES ↓

┌ NO ── SYSTEM CONTROLLER
CONTROL OPERATION
SECTION ? — S23                    PROCESS CONTROLLER
CONTROL OPERATION
SECTION ? — S25 ── NO ┐

│         YES ↓                              YES ↓                │

│   PLACE CONTROL OF
OPERATION SECTION UNDER
PROCESS CONTROLLER — S24      PLACE CONTROL OF
OPERATION SECTION UNDER
SYSTEM CONTROLLER — S26        │

↓

END

# FIG. 16

LINE EXTRACTING CONTROL SECTION

Inputs: clk, xrest, xfgate, xlsync, xlgate, yzsp[12:0], avc, cor, col, rgb_sel

Outputs: xfg_out, xls_out, xfg_mg, xfg_avc, xfg_rd, xfg_rdor

# FIG. 17A

# FIG. 17B

EP 1 387 567 A2

# FIG.18

```
        ┌─────────────┐
        │    START    │
        └─────────────┘
               │
               ▼                    S31
        ┌─────────────────┐
        │   rzsp = 1024   │
        └─────────────────┘
               │
               ▼                    S32
        ╱─────────────────╲  YES
       ⟨  OTHER THAN G :   ⟩────────┐
        ╲  COLOR MODE ?   ╱         │
               │ NO                 │
               ▼              S33   │
        ┌─────────────────┐        │
        │ rsp = rzsp − 1024│        │
        └─────────────────┘        │
               │                    │
               ▼◄───────────────────┘
                                S34
        ╱─────────────────╲  NO
       ⟨    rsp > 1023 ?   ⟩────────┐
        ╲─────────────────╱         │
               │ YES                │
               ▼              S35   │  S37
```

S36

rzsp = rsp

S38

rzsp = rsp + YZSP

DESIGNATION AS
EXTRACTING LINE

DESIGNATION AS NON
EXTRACTING LINE

# FIG. 19

clk ⟶ [ GRB CONTROL CIRCUIT ] ⟶ rgb_sel

xrst ⟶

col ⟶

# FIG. 20

col = 1

R  G  B  R  G  B  R  G  B  R  G  B  R  G  B

col = 0

B/W   B/W   B/W   B/W   B/W   B/W   B/W

CIS LIGHTING CONTROL

B  R  G  B  R  G  B  R  G  B  R  G  B  R  G

# FIG. 21

# FIG. 22

PUBLIC LINE

PARALLEL BUS 224

PC ~240

235

FAX CONTROL UNIT (FCU) 221

MEMORY MODULE (MEM) 222

IMAGE MEMORY ACCESS CONTROLLER (IMAC) 223

OPERATION PANEL ~231

ROM ~232

RAM ~233

SYSTEM CONTROLLER ~234

IMAGE DATA CONTROL SECTION (CDIC) 203

READING UNIT 201

SENSOR BOARD UNIT (SBU) 202

IMAGE PROCESSING PROCESSOR (IPP) 204

VIDEO DATA CONTROL SECTION (VDC) 205

IMAGE FORMATION UNIT 206

PROCESS CONTROLLER 207

RAM 208

ROM 209

INPUT/OUTPUT CONTROL SECTION 210

SERIAL BUS 211

EP 1 387 567 A2

# FIG. 23A

<REDUCTION RATE : S%>

| MULTI VALUE | EXTRACTION | AVERAGE/COMPARISON | |
|---|---|---|---|
| REDUCTION RATE | —— | OVER 50% | LESS THAN 50% |
| xlg_mb | S%<br>(lgm) | 100%<br>(lg) | 2S%<br>(lgm) |
| xlg_avc | 100%<br>(lg) | S%<br>(lgm) | 50%<br>(lg2) |

# FIG. 23B

<REDUCTION RATE : S%>

| BINARY | TOTAL REDUCTION RATE | |
|---|---|---|
| OR PROCESS | OFF | ON |
| xlg_rd | S% | |
| xlg_rdor | S%<br>(xlg_rd) | S/2%<br>(lg_rd2) |